# EUROPEAN PATENT APPLICATION

(11) **EP 4 827 191 A1**
(43) Date of publication of application: **21.10.2026**
(21) Application number: 25744461.2
(22) Date of filing: 09.01.2025
(51) Int. Cl.: H04W 56/00, H04B 7/185

(54) **COMMUNICATION METHOD AND APPARATUS**

(30) Priority: 22.01.2024 CN 202410089113
(71) Applicant: Huawei Technologies Co., Ltd., Shenzhen, Guangdong 518129 (CN)
(72) Inventor: KONG, Chuili, Shenzhen, Guangdong 518129 (CN); LI, Kexin, Shenzhen, Guangdong 518129 (CN); YU, Tianhang, Shenzhen, Guangdong 518129 (CN); WANG, Jun, Shenzhen, Guangdong 518129 (CN)
(74) Representative: Goddar, Heinz J.
(86) International application number: PCT/CN2025/071519
(87) International publication number: WO 2025/157017

(57) **Abstract**

A communication method and apparatus are provided, and applied to a satellite communication system. The method includes: A first satellite determines first information and sends the first information. The first information includes synchronization information of at least one second satellite, and synchronization information of each second satellite includes at least one synchronization index. The first satellite may plan a manner **in** which a plurality of second satellites send synchronization signals, for example, by assigning different synchronization indexes to the synchronization signals sent by each second satellite. This method reduces or even avoids interference among synchronization signals of satellites, thereby improving communication performance.

## Description

### CROSS-REFERENCE TO RELATED APPLICATIONS

This application claims priority to Chinese Patent Application No. 202410089113.7, filed with the China National Intellectual Property Administration on January 22, 2024 and entitled "COMMUNICATION METHOD AND APPARATUS", which is incorporated herein by reference in its entirety.

### TECHNICAL FIELD

This application relates to the field of satellite technologies, and in particular, to a communication method and apparatus.

### BACKGROUND

In consideration of network coverage and capacity, multi-layer constellation networks have become a new development trend for satellite communication networks. In a multi-layer constellation network, a plurality of satellites are deployed at different orbital altitudes, and satellites at the same orbital altitude may be considered as one layer. Each satellite independently sends synchronization signal and physical broadcast channel blocks (synchronization signal and physical downlink broadcast channel blocks, SSBs), and a terminal device determines, based on the received SSB, which satellite to access. Because satellites at different layers are relatively independent and move at high speeds, if each satellite independently sends SSBs, a plurality of satellites may send SSBs corresponding to the same geographical area, resulting in severe interference among the SSBs of the plurality of satellites.

### SUMMARY

Embodiments of this application provide a communication method and apparatus, to appropriately plan a manner in which satellites send SSBs, thereby reducing or even avoiding interference among SSBs of a plurality of satellites and improving communication performance.

To achieve the foregoing objectives, the following technical solutions are used in embodiments of this application.

**According to a first aspect**, an embodiment of this application provides a communication method, which may be performed by a first communication apparatus. The first communication apparatus may be a combined device, a component, or the like that is configured to implement a function of a satellite. For example, the first communication apparatus is a satellite, or the first communication apparatus is a unit/module, a circuit, a chip, or the like in the satellite. The following describes the method provided in the first aspect by using an example in which the first communication apparatus is a first satellite.

The communication method includes: The first satellite determines first information, and sends the first information. The first information includes synchronization information of at least one second satellite, and synchronization information of each second satellite includes at least one synchronization index.

The first satellite may be an anchor satellite of a terminal device, while a second satellite may be a satellite within coverage of the first satellite, or may be referred to as a subordinate satellite or a secondary satellite. The first satellite may schedule the second satellite. A terminal device within coverage (or a coverage area) of the first satellite may access any second satellite within the coverage of the first satellite. A synchronization index may indicate a synchronization signal. In the method, the first satellite plans a manner in which a plurality of second satellites send synchronization signals. For example, the first satellite may indicate different second satellites to send synchronization signals indicated by different synchronization indexes. According to the method, interference among synchronization signals of satellites can be reduced or even avoided, thereby improving communication performance.

In an implementation, the synchronization information of each second satellite further includes a time period corresponding to the at least one synchronization index.

In this solution, the first satellite may further plan time periods during which second satellites send synchronization signals. For example, different second satellites send different synchronization signals during a same time period, or different second satellites send a same synchronization signal during different time periods, or different second satellites send different synchronization signals during different time periods. The time periods during which the second satellites send the synchronization signals are planned, so that interference among synchronization signals of a plurality of second satellites is reduced, and resources for sending synchronization signals can be further saved, thereby ensuring coverage as much as possible.

In an implementation, the first information further includes ephemeris information of the at least one second satellite, identification information of the at least one second satellite, or identification information of at least one transmission reception point (transmission reception point, TRP), where one TRP corresponds to one second satellite.

Both the identification information of the second satellite and the identification information of the TRP can indirectly indicate the ephemeris information of the second satellite. Information related to the ephemeris information of the at least one second satellite is carried in the first information, so that a second satellite receiving the first information can determine, from the first information, specific synchronization information that belongs to the second satellite. In this way, the first satellite may broadcast the first information, to reduce signaling overhead.

In an implementation, the at least one second satellite includes a plurality of second satellites, and the plurality of second satellites correspond to a same cell identifier. In this way, when a terminal device moves from coverage of a second satellite to coverage of another second satellite, the terminal device always remains in a same cell, and does not need to perform a cell handover procedure. According to this solution, the cell handover procedure performed by the terminal device can be omitted, to improve communication efficiency.

In an implementation, the method further includes: The first satellite sends second information to a second satellite A in the plurality of second satellites, where the second information includes first time information and a first synchronization index, and indicates the second satellite A to send, during a time period indicated by the first time information, a synchronization signal indicated by the first synchronization index. The time period indicated by the first time information is not within a time period during which a second satellite B in the plurality of second satellites provides a service based on the first synchronization index.

In this solution, the second satellite B cannot provide a service for a terminal device based on the first synchronization index during the time period indicated by the first time information, or the second satellite B cannot send, during the time period indicated by the first time information, the synchronization signal indicated by the first synchronization index. In this case, the first satellite may determine to replace the second satellite B with the second satellite A to provide a service for the terminal device based on the first synchronization index during the time period indicated by the first time information, thereby reducing impact on data transmission performance of the terminal device.

In an implementation, the method further includes: The first satellite receives third information from the second satellite B, where the third information includes the first time information and the first synchronization index.

In this solution, when the second satellite B cannot provide a service for a terminal device based on the first synchronization index during the time period indicated by the first time information, the second satellite B reports this to the first satellite by using the third information, so that the first satellite reselects the second satellite A to serve the terminal device in place of the second satellite B, thereby reducing impact on data transmission performance of the terminal device.

**According to a second aspect**, an embodiment of this application provides a communication method, which may be performed by a second communication apparatus. The second communication apparatus may be a combined device, a component, or the like that is configured to implement a function of a satellite. For example, the second communication apparatus is a satellite, or the second communication apparatus is a unit/module, a circuit, a chip, or the like in the satellite. The following describes the method provided in the second aspect by using an example in which the second communication apparatus is a second satellite.

The communication method includes: The second satellite determines a first synchronization signal, and sends the first synchronization signal. The first synchronization signal includes a second synchronization index, the second synchronization index is associated with second ephemeris information, and the second ephemeris information is different from ephemeris information associated with a synchronization index corresponding to another second satellite.

In an implementation, the first synchronization signal further includes the second ephemeris information or a first association relationship, where the first association relationship is an association relationship between at least one synchronization index and at least one piece of ephemeris information.

In an implementation, the method further includes: The second satellite receives first information from a first satellite, where the first information includes synchronization information of at least one second satellite, and synchronization information of each second satellite includes at least one synchronization index.

In an implementation, the synchronization information of each second satellite further includes a time period corresponding to the at least one synchronization index.

In an implementation, the first information further includes ephemeris information of the at least one second satellite, identification information of the at least one second satellite, or identification information of at least one TRP, where one TRP corresponds to one second satellite.

In an implementation, the method further includes: The second satellite receives second information from the first satellite, and sends a second synchronization signal during a time period indicated by first time information. The second information includes the first time information and a first synchronization index, and indicates the second satellite to send, during the time period indicated by the first time information, a synchronization signal indicated by the first synchronization index. The time period indicated by the first time information is not within a time period during which another second satellite provides a service based on the first synchronization index. The second synchronization signal includes the first synchronization index.

In an implementation, the method further includes: The second satellite sends fourth information to the first satellite, where the fourth information includes second time information and a third synchronization index, and the third synchronization index is unavailable for providing a service during a time period indicated by the second time information.

For beneficial effects of the second aspect and the implementations of the second aspect, refer to beneficial effects of the first aspect and the implementations of the first aspect. Details are not described herein again.

**According to a third aspect**, an embodiment of this application provides a communication method, which may be performed by a third communication apparatus. The third communication apparatus may be a combined device, a component, or the like that is configured to implement a function of a terminal device. For example, the third communication apparatus is a terminal device, or the third communication apparatus is a unit/module, a circuit, a chip, or the like in the terminal device. The following describes the method provided in the second aspect by using an example in which the third communication apparatus is the terminal device.

The communication method includes: The terminal device receives a first synchronization signal, where the first synchronization signal includes a second synchronization index; the terminal device determines second ephemeris information based on the second synchronization index and a first association relationship, where the first association relationship is an association relationship between at least one synchronization index and at least one piece of ephemeris information; the terminal device determines a timing advance (timing advance, TA) value based on the second ephemeris information; and the terminal device sends a random access preamble based on the TA value.

For beneficial effects of the second aspect and the implementations of the second aspect, refer to beneficial effects of the first aspect and the implementations of the first aspect. Details are not described herein again.

**According to a fourth aspect**, an embodiment of this application provides a communication method, which may be performed by a first communication apparatus. The first communication apparatus may be a combined device, a component, or the like that is configured to implement a function of a satellite. For example, the first communication apparatus is a satellite, or the first communication apparatus is a unit/module, a circuit, a chip, or the like in the satellite. The following describes the method provided in the first aspect by using an example in which the first communication apparatus is a first satellite.

The communication method includes: The first satellite sends a third synchronization signal by using a resource in a first resource set; receives a first random access preamble from a terminal device; determines a second satellite A based on the first random access preamble and a second association relationship; and sends a random access response message to the terminal device. The second association relationship includes an association relationship between a plurality of resource subsets and a plurality of second satellites, a resource for the first random access preamble belongs to a first resource subset in the plurality of resource subsets, and the second satellite A belongs to the plurality of second satellites. The random access response message includes ephemeris information and resource information of the second satellite A, and the resource information indicates a resource for the second satellite A to send a synchronization signal.

In this solution, the first resource set is a set of random access resources corresponding to the first satellite. The first resource set may be partitioned into a plurality of resource subsets, where one resource subset corresponds to one second satellite, and one second satellite may correspond to one or more resource subsets. When the terminal device has a data transmission requirement, a resource may be selected from a resource subset corresponding to a second satellite that corresponds to the terminal device, to send the first random access preamble. In this way, the first satellite may determine, based on the resource used for the first random access preamble, coverage of a specific second satellite within which the terminal device is located, to schedule the second satellite to provide a service for the terminal device. According to this solution, when the terminal device has no data transmission requirement, there is no need to schedule any second satellite to send a synchronization signal, so that unnecessary sending of synchronization signals can be reduced, thereby saving resources and reducing power consumption of satellites.

In an implementation, the method further includes: The first satellite sends fifth information, where the fifth information indicates the second association relationship, the second association relationship further includes an association relationship between the plurality of resource subsets and the first resource set, and the plurality of resource subsets are obtained by partitioning the first resource set.

The first satellite may notify the terminal device of the association relationship between the first resource set and the plurality of resource subsets by using dynamic signaling. This is more flexible.

**According to a fifth aspect**, an embodiment of this application provides a communication method, which may be performed by a third communication apparatus. The third communication apparatus may be a combined device, a component, or the like that is configured to implement a function of a terminal device. For example, the third communication apparatus is a terminal device, or the third communication apparatus is a unit/module, a circuit, a chip, or the like in the terminal device. The following describes the method provided in the second aspect by using an example in which the third communication apparatus is the terminal device.

The communication method includes: The terminal device receives a third synchronization signal from a first satellite, where the third synchronization signal is sent by using a resource in a first resource set; the terminal device sends a first random access preamble to the first satellite; the terminal device receives a random access response message, where the random access response message includes ephemeris information and resource information of a second satellite, and the resource information indicates a resource for the second satellite to send a synchronization signal; and the terminal device receives the synchronization signal from the second satellite on the resource indicated by the resource information.

In an implementation, the method further includes: The terminal device determines a first resource subset based on the first resource set and a second association relationship, where the second association relationship includes an association relationship between the first resource set and a plurality of resource subsets, the plurality of resource subsets are obtained by partitioning the first resource set, and the first resource subset belongs to the plurality of resource subsets. That the terminal device sends the first random access preamble to the first satellite includes: The terminal device sends the first random access preamble to the first satellite by using a resource in the first resource subset.

For beneficial effects of the fifth aspect and the implementations of the fifth aspect, refer to beneficial effects of the fourth aspect and the implementations of the fourth aspect. Details are not described herein again.

**According to a sixth aspect**, an embodiment of this application provides a communication method, which may be performed by a first communication apparatus, a second communication apparatus, and a third communication apparatus. The first communication apparatus and the second communication apparatus may be combined components, components, or the like that are configured to implement functions of satellites. For example, the first communication apparatus is a first satellite, or the first communication apparatus is a unit/module, a circuit, a chip, or the like in the first satellite. The second communication apparatus is a second satellite, or the second communication apparatus is a unit/module, a circuit, a chip, or the like in the second satellite. The third communication apparatus may be a combined device, a component, or the like that is configured to implement a function of a terminal device. For example, the third communication apparatus is a terminal device, or the third communication apparatus is a unit/module, a circuit, a chip, or the like in the terminal device.

For example, the first communication apparatus is the first satellite, the second communication apparatus is the second satellite, and the third communication apparatus is the terminal device. The communication method includes: The first satellite sends first information, where the first information includes synchronization information of at least one second satellite, and synchronization information of each second satellite includes at least one synchronization index; the second satellite sends a first synchronization signal, where the first synchronization signal includes a second synchronization index, the second synchronization index is associated with second ephemeris information, and the second ephemeris information is different from ephemeris information associated with a synchronization index corresponding to another second satellite. The terminal device receives the first synchronization signal, where the first synchronization signal includes the second synchronization index; the terminal device determines the second ephemeris information based on the second synchronization index and a first association relationship, where the first association relationship is an association relationship between the at least one synchronization index and at least one piece of ephemeris information; the terminal device determines a TA value based on the second ephemeris information; and the terminal device sends a random access preamble based on the TA value.

For another example, the first satellite sends a third synchronization signal by using a resource in a first resource set. The terminal device receives the third synchronization signal, and sends a first random access preamble to the first satellite. The first satellite receives the first random access preamble, and sends a random access response message to the terminal device, where the random access response message includes ephemeris information and resource information of the second satellite, and the resource information indicates a resource for the second satellite to send a synchronization signal. The terminal device receives the synchronization signal from the second satellite on the resource indicated by the resource information.

**According to a seventh aspect**, an embodiment of this application provides a communication apparatus. The communication apparatus has a function of implementing behavior in the method example in any one of the first aspect to the fifth aspect. For beneficial effects, refer to related descriptions of the first aspect to the fourth aspect. Details are not described herein again. For example, the communication apparatus may be the first satellite in the first aspect or the fourth aspect, or the communication apparatus may be an apparatus that supports a satellite in implementing a function required in the method provided in the first aspect or the fourth aspect. For example, the communication apparatus may be a chip or a chip system in a satellite. For another example, the communication apparatus may be the second satellite in the second aspect, or the communication apparatus may be an apparatus that supports a satellite in implementing a function required in the method provided in the second aspect. For example, the communication apparatus may be a chip or a chip system in a satellite. For example, the communication apparatus may be the terminal device in the third aspect or the fifth aspect, or the communication apparatus may be an apparatus that supports the terminal device in implementing a function required by the method provided in the third aspect or the fifth aspect. For example, the communication apparatus may be a chip or a chip system in the terminal device.

In a possible design, the communication apparatus includes a baseband apparatus and a radio frequency apparatus.

In a possible design, the communication apparatus includes a corresponding means (means) or module configured to perform the method according to any one of the first aspect to the fifth aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, the functional unit is referred to as a transceiver unit, and the functional unit can implement the sending function and the receiving function. Alternatively, the sending unit and the receiving unit may be different functional units, and the transceiver unit is a general term for these functional units. These units (modules) may perform corresponding functions in the method example in any one of the first aspect to the fifth aspect. For details, refer to detailed descriptions in the method example. Details are not described herein.

**According to an eighth aspect**, an embodiment of this application provides a communication apparatus. The communication apparatus may be the communication apparatus in the seventh aspect of the foregoing embodiments, or may be a chip or a chip system disposed in the communication apparatus in the seventh aspect. The communication apparatus includes a communication interface and a processor, and optionally, further includes a memory. The memory is configured to store a computer program, instructions, or data, and the processor is coupled to the memory and the communication interface. When the processor reads the computer program, the instructions, or the data, the communication apparatus is caused to perform the method performed by the terminal device in the foregoing method embodiments. For example, the communication apparatus may be a terminal device or a functional module in the terminal device, for example, a baseband chip and a radio frequency chip. Alternatively, when the processor reads the computer program, the instructions, or the data, the communication apparatus is caused to perform the method performed by the first satellite or the second satellite in the foregoing method embodiments. For example, the communication apparatus may be a satellite or a functional module in the satellite, for example, a baseband chip and a radio frequency chip.

**According to a ninth aspect**, an embodiment of this application provides a chip system. The chip system includes a processor, may further include a communication interface, and is configured to implement the method according to any one of the first aspect to the fifth aspect. Optionally, the chip system further includes a memory. The memory is configured to store a computer program (which may also be referred to as code or instructions). The processor is configured to invoke the computer program from the memory and run the computer program, to cause a device on which the chip system is installed to perform the method according to any one of the first aspect to the fifth aspect and any one of the implementations of the first aspect to the fifth aspect. The chip system may include a chip, or may include the chip and another discrete component.

**According to a tenth aspect**, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to any one of the first aspect to the fifth aspect.

In a specific implementation process, the communication apparatus may be a chip, the input circuit may be an input pin, the output circuit may be an output pin, and the logic circuit may be a transistor, a gate circuit, a trigger, various logic circuits, or the like. An input signal received by the input circuit may be received and inputted by, for example, but not limited to, a receiver. A signal outputted by the output circuit may be outputted to, for example, but not limited to, a transmitter and transmitted by the transmitter. In addition, the input circuit and the output circuit may be a same circuit, where the circuit is used as the input circuit and the output circuit at different moments. Specific implementations of the input/output interface and the logic circuit are not limited in this application.

In an implementation, when the communication apparatus is a wireless communication device, the wireless communication device may be a terminal device, for example, a smartphone, or the wireless communication device may be a network device, for example, a satellite. The interface circuit may be a radio frequency processing chip in the wireless communication device, and the processing circuit may be a baseband processing chip in the wireless communication device.

**According to an eleventh aspect**, an embodiment of this application provides a communication system. The communication system includes a terminal device and a plurality of satellites, and the plurality of satellites include a first satellite and a second satellite. The first satellite is configured to implement a function of the method in the first aspect, the second satellite is configured to implement a function of the method in the second aspect, and the terminal device is configured to implement a function of the method in the third aspect. Alternatively, the first satellite is configured to implement a function of the method in the fourth aspect, and the terminal device is configured to implement a function of the method in the fifth aspect.

**According to a twelfth aspect**, an embodiment of this application provides a computer-readable storage medium. The computer-readable storage medium is configured to store a computer program or instructions, and when the computer program or the instructions are run, the method according to any one of the first aspect to the fifth aspect and the implementations of the first aspect to the fifth aspect is implemented.

**According to a thirteenth aspect**, an embodiment of this application further provides a computer program product including instructions. When the computer program product is run on a computer, the method according to any one of the first aspect to the fifth aspect and the implementations of the first aspect to the fifth aspect is implemented.

For beneficial effects of the sixth aspect to the thirteenth aspect and the implementations of the sixth aspect to the thirteenth aspect, refer to the beneficial effects of the first aspect or the fourth aspect and any implementation of the first aspect or the fourth aspect.

### BRIEF DESCRIPTION OF DRAWINGS

FIG. 1 is a diagram of an architecture of a communication system according to an embodiment of this application;
FIG. 2 is a diagram of an application scenario according to an embodiment of this application;
FIG. 3 is a diagram of another architecture of a communication system according to an embodiment of this application;
FIG. 4 is a schematic flowchart of a communication method 400 according to an embodiment of this application;
FIG. 5 is a diagram of a staring service in a satellite movement process according to an embodiment of this application;
FIG. 6 is a schematic flowchart of a communication method 600 according to an embodiment of this application;
FIG. 7 is a diagram of a network architecture of a satellite communication system according to an embodiment of this application;
FIG. 8 is a schematic flowchart of a communication method 800 according to an embodiment of this application;
FIG. 9 is a diagram of a structure of a communication apparatus according to an embodiment of this application; and
FIG. 10 is a diagram of another structure of a communication apparatus according to an embodiment of this application.

### DESCRIPTION OF EMBODIMENTS

According to the method provided in embodiments of this application, interference among synchronization signals of a plurality of satellites can be reduced or even avoided, thereby improving communication performance. The following describes, with reference to the accompanying drawings, the solutions provided in embodiments of this application.

The technical solutions provided in embodiments of this application may be applied to a non-terrestrial network (non-terrestrial network, NTN) system. The NTN system is a communication system formed by non-terrestrial network devices through networking. The non-terrestrial network device includes, for example, a device such as a satellite, a high altitude platform station (high altitude platform station, HAPS), or an uncrewed aerial vehicle. The non-terrestrial network device in embodiments of this application is not limited to the foregoing examples. The non-terrestrial network device in this application may also be referred to as an air network device. In embodiments of this application, a satellite communication system may be integrated with a conventional mobile communication system. The mobile communication system may be a long term evolution (long term evolution, LTE) communication system, or a 5th generation (the sixth generation, 5G) mobile communication system (for example, a new radio (new radio, NR) system), or the mobile communication system may be applied to another next generation mobile communication system, or another similar communication system. The another similar communication system may include a wireless fidelity (wireless fidelity, Wi-Fi) system, a vehicle to everything (vehicle to everything, V2X) system, an internet of things (internet of things, IoT) system, a narrowband internet of things (narrowband internet of things, NB-IoT) system, and the like.

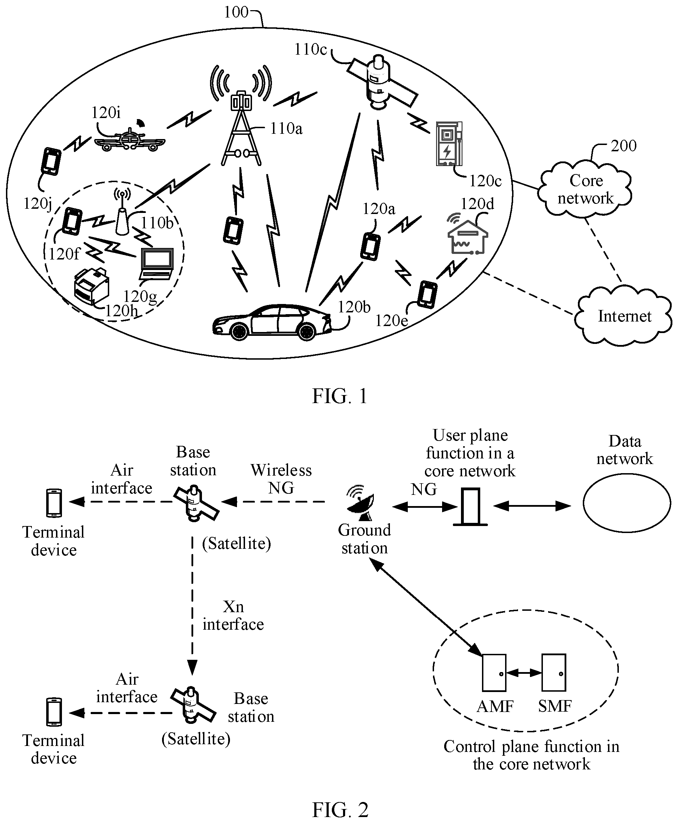

In an example, FIG. 1 is a diagram of a network architecture of a communication system according to an embodiment of this application. The communication system includes a radio access network 100 and a core network 200. Optionally, the communication system may further include an internet (this is used as an example in FIG. 1).

The radio access network 100 may include at least one network device (for example, 110a, 110b, and 110c in FIG. 1), and at least one terminal device (for example, 120a to 120j in FIG. 1). The network architecture shown in FIG. 1 is merely an example, and there may be fewer or more terminal devices and/or network devices. The communication system described in this embodiment of this application is intended to describe the technical solutions in embodiments of this application more clearly, but constitutes no limitation on the communication system to which embodiments of this application are applicable. For example, the communication system may further include another device, and the another device includes, for example, a wireless relay device and a wireless backhaul device, which are not shown in FIG. 1. A person of ordinary skill in the art may learn that with evolution of the network architecture, the technical solutions provided in embodiments of this application are also applicable to a similar technical problem. When the technical solutions in embodiments of this application are applied to another communication system, the devices, components, modules, and the like in embodiments may be replaced with corresponding devices, components, and modules in the another communication system. This is not limited.

In this embodiment of this application, a network device is a radio access network (radio access network, RAN) device. The RAN may be a 3GPP-related cellular system, for example, a 5G/new radio (new radio, NR) mobile communication system, or a future-oriented evolved system. Alternatively, the RAN may be an open access network (open RAN, O-RAN or ORAN), a cloud radio access network (cloud radio access network, CRAN), a virtualized radio access network (virtualized RAN, vRAN), or the like. Alternatively, the RAN may be a communication system that integrates two or more of the foregoing systems. The RAN device may also be referred to as a RAN node, a RAN entity, an access node, or the like.

In a possible scenario, the RAN node may be a base station (base station), an evolved NodeB (evolved NodeB, eNodeB), an access point (access point, AP), a TRP, a next generation NodeB (next generation NodeB, gNB), a base station in a future mobile communication system, or the like. The RAN node may be a macro base station, a micro base station, an indoor base station, a relay node, a donor node/host node, a radio controller, or the like. The RAN node may alternatively be a server, a wearable device, a vehicle, a vehicle-mounted device, or the like. For example, the RAN node in a V2X technology may be a roadside unit (roadside unit, RSU).

In another possible scenario, the RAN node may be a module or unit that completes a part of functions of a base station; or a plurality of RAN nodes cooperate to assist a terminal device in implementing radio access, and different RAN nodes separately implement a part of functions of a base station. For example, the RAN node may be a central unit (central unit, CU), a distributed unit (distributed unit, DU), or a radio unit (radio unit, RU). A function of the CU may be implemented by one entity, or may be implemented by different entities. For example, functions of the CU may be further divided. To be specific, a control plane and a user plane are separated, and are implemented by different entities: a control plane CU entity (that is, a CU-control plane (control plane, CP) entity) and a user plane CU entity (that is, a CU-user plane (user plane, UP) entity). The CU-CP entity and the CU-UP entity may be coupled to the DU, to jointly complete functions of the RAN node. The CU and the DU may be separately disposed, or may be included in a same network element, for example, a baseband unit (baseband unit, BBU).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

The CU and the DU may be configured based on protocol layer functions of a wireless network implemented by the CU and the DU. For example, the CU is configured to implement functions of a packet data convergence protocol (packet data convergence protocol, PDCP) layer and a protocol layer above the PDCP layer (for example, a radio resource control (radio resource control, RRC) layer and/or a service data adaptation protocol (service data adaptation protocol, SDAP) layer). The DU is configured to implement a function of a protocol layer below the PDCP layer (for example, a radio link control (radio link control, RLC) layer, a media access control (media access control, MAC) layer, and/or a physical (physical, PHY) layer). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer). For detailed descriptions of the foregoing protocol layers, refer to a related technical specification of the 3GPP or a technical specification of another applicable communication protocol. Division into processing functions of the CU and the DU based on protocol layers is merely an example. Division may alternatively be performed in another manner. This is not limited in this application. For example, in a design, the CU or the DU may alternatively be divided to have a part of processing functions of protocol layers. In a design, a part of functions of the RLC layer and functions of a protocol layer above the RLC layer are set on the CU, and remaining functions of the RLC layer and functions of a protocol layer below the RLC layer are set on the DU.

In embodiments of this application, an apparatus configured to implement a function of the network device may be a network device, or may be an apparatus that supports the network device in implementing the function, for example, a chip system or a combined device or component that can implement the function of the network device. The apparatus may be mounted in the network device. A specific technology and a specific device form that are used by the network device are not limited in embodiments of this application.

A terminal device is also referred to as a terminal, a terminal apparatus, user equipment (user equipment, UE), a mobile station, a mobile terminal, or the like. In embodiments of this application, any device that can perform data communication with a base station may be considered as the terminal device. The terminal device may be widely applied to various scenarios. For example, the terminal device may be a mobile phone, a computer, a mobile internet device (mobile internet device, MID), a wearable device, a virtual reality (virtual reality, VR) device, an augmented reality (augmented reality, AR) device, a station (station, STA), a robot arm, a camera, a robot, a vehicle, an uncrewed aerial vehicle, a helicopter, an airplane, a ship, or a smart home device (for example, a television, an air conditioner, a floor sweeper, a sound box, or a set-top box), a relay (relay), customer premises equipment (customer premise equipment, CPE), a smart car (smart car or intelligent car), a roadside unit (roadside unit, RSU), or the like. Alternatively, the terminal device may be a terminal device in an IoT system, for example, a water meter, or an electric meter, or the like.

If various terminal devices described above are located in a vehicle (for example, placed/mounted in the vehicle), the terminal devices may all be considered as vehicle-mounted terminal devices. The vehicle-mounted terminal device may be a vehicle-mounted module, a vehicle-mounted assembly, a vehicle-mounted component, a vehicle-mounted chip, or an on-board unit that is built in a vehicle as one or more components or units. The vehicle may implement the method in this application by using the vehicle-mounted module, the vehicle-mounted assembly, the vehicle-mounted component, the vehicle-mounted chip, or the on-board unit that is in the vehicle. The vehicle-mounted terminal device may be a vehicle device, a vehicle-mounted module, a vehicle, an on-board unit (on-board unit, OBU), a roadside unit (roadside unit, RSU), a telematics box (telematics box, T-box) (or referred to as an in-vehicle sending unit), a chip, a system on chip (system on chip, SoC), or the like. The chip or the SoC may be installed in the vehicle, the OBU, the RSU, or the T-box.

In embodiments of this application, an apparatus configured to implement a function of the terminal device may be the terminal device, or may be an apparatus that supports the terminal device in implementing the function, for example, a chip system or a combined device or component that can implement the function of the terminal device. The apparatus may be mounted in the terminal device. A specific technology and a specific device form that are used by the terminal device are not limited in embodiments of this application.

In this embodiment of this application, the network device may be deployed on a satellite. When a network device is deployed on a satellite, a typical communication scenario is shown in FIG. 2. A communication system shown in FIG. 2 includes two terminal devices (which may be referred to as terminals for short), two base stations, a ground station, and a core network device. The core network device includes a control plane function and a user plane function. For example, the control plane function includes an access and mobility management function (access and mobility management function, AMF) and a session management function (session management function, SMF). The user plane function includes a user plane function (user plane function, UPF), and is responsible for managing functions such as user plane data transmission and traffic statistics collection. The base station is deployed on a satellite, and is also referred to as a satellite base station or a satellite-borne base station (satellite gNB, S-gNB). An air interface is a communication interface between a terminal device and a base station. An Xn interface is an interface between base stations and is mainly configured to exchange signaling, for example, handover. An NG interface is an interface between a base station and a core network, or an interface between a ground station and a core network. The NG interface is mainly configured to exchange signaling, for example, non-access stratum (non-access stratum, NAS) signaling of the core network, and service data of a user. The NG interface may be in a wired form or a wireless form. In FIG. 2, the satellite base station communicates with the ground station through an air interface, and the ground station is connected to the core network through an NG interface. The ground terminal device communicates with the satellite base station through the air interface, to access a communication network. A type and a quantity of satellites are not limited in this embodiment of this application. For example, the satellite may be a highly elliptical orbit (highly elliptical orbit, HEO) satellite, a geostationary earth orbit (geostationary earth orbit, GEO) satellite, a medium earth orbit (medium earth orbit, MEO) satellite, or a low earth orbit (low earth orbit, LEO) satellite.

In consideration of a coverage and capacity distribution of a communication system, satellites at a plurality of orbital heights are usually deployed, and the deployed satellites have different orbital inclinations. Such communication system is also referred to as a multi-layer satellite network/multi-layer constellation network. Satellites at the same orbital altitude may be considered as one layer. A constellation is a set of satellites that are launched into orbit and that can work normally, and is also referred to as a satellite constellation. A satellite may notify a terminal device of presence of the satellite through beam sweeping. A process in which a satellite performs beam sweeping is a process in which the satellite sends an SSB. The satellite sends the SSB, and a terminal within coverage of the satellite may receive the SSB, so that the terminal device is connected to the satellite to access a network.

In a multi-layer satellite network, satellites at different layers are relatively independent and move at high speeds. If the satellites independently send SSBs, SSBs of a plurality of satellites may correspond to one geographical area, or there is a large overlapping part in geographical areas corresponding to the SSBs of the plurality of satellites. For the terminal device, there is strong interference among received SSBs, and it is difficult to demodulate, from the received signals, the SSBs corresponding to the satellites.

To resolve the foregoing problem, the solutions provided in embodiments of this application are provided. In this embodiment of this application, an anchor satellite of a terminal device plans a manner in which satellites within coverage of the anchor satellite send SSBs, thereby reducing or even avoiding interference among SSBs of satellites. Relatively speaking, a satellite within the coverage of the anchor satellite may be referred to as a subordinate satellite or a secondary satellite. The coverage of the anchor satellite is larger than that of a subordinate satellite, and a movement speed of the anchor satellite is faster than that of the subordinate satellite. A terminal device within the coverage (or a coverage area) of the anchor satellite may access any subordinate satellite within the coverage of the anchor satellite. The anchor satellite knows a location of the terminal device, and therefore knows which subordinate satellite the terminal device is likely to access.

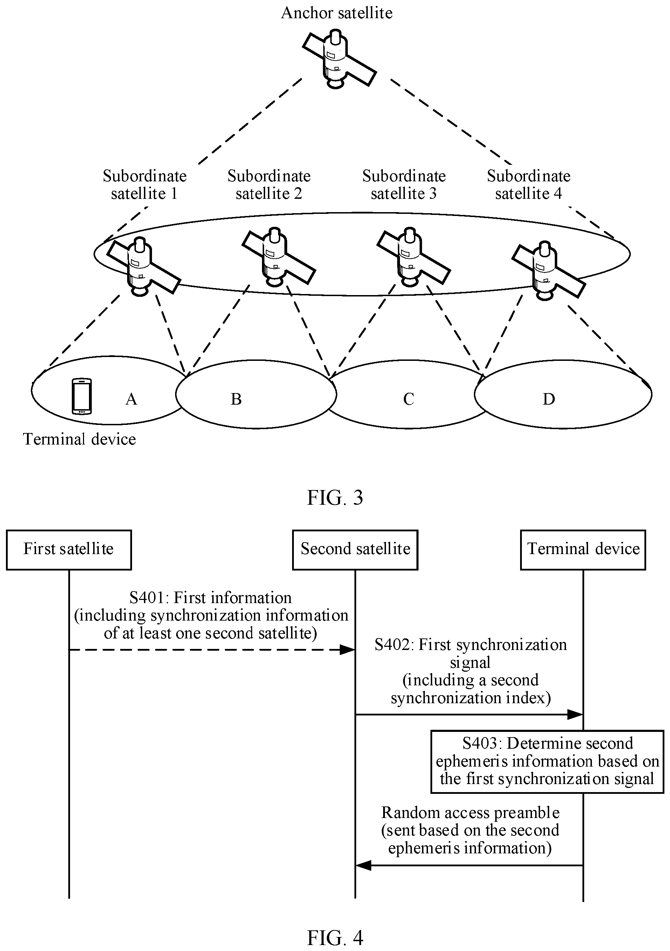

For example, FIG. 3 is a diagram of another architecture of a communication system to which an embodiment of this application is applicable. The system shown in FIG. 3 includes an anchor satellite, a plurality of subordinate satellites (for example, a subordinate satellite 1 to a subordinate satellite 4 in FIG. 3), and a terminal device. The subordinate satellite 1 to the subordinate satellite 4 are all within coverage of the anchor satellite. Coverage of the subordinate satellites may overlap or may not overlap. For example, the subordinate satellite 1 corresponds to coverage A, a subordinate satellite 2 corresponds to coverage B, a subordinate satellite 3 corresponds to coverage C, and the subordinate satellite 4 corresponds to coverage D. The anchor satellite may plan a manner in which the subordinate satellite 1 to the subordinate satellite 4 respectively send SSBs, or the anchor satellite may indicate how the subordinate satellite 1 to the subordinate satellite 4 send the SSBs. In this way, the SSBs respectively sent by the subordinate satellite 1 to the subordinate satellite 4 do not interfere with each other, so that the terminal device clearly determines a specific subordinate satellite to which a received SSB belongs, and further accesses a network.

In this embodiment of this application, "association" may also be replaced with "mapping", "correlation", or "correspondence". For example, an association relationship between at least one synchronization index and at least one piece of ephemeris information may also be a correspondence between the at least one synchronization index and the at least one piece of ephemeris information. Ephemeris information associated with a synchronization index may be ephemeris information corresponding to the synchronization index. A specific implementation form of the association relationship is not limited in this embodiment of this application. For example, the association relationship may be a table, and sending a first association relationship may be sending a table indicating the first association relationship.

In this embodiment of this application, a beam may be understood as/may be replaced with "a spatial filter (spatial filter)", "a spatial parameter (spatial parameter)", "an outer-layer weight", "an analog weight", or "an analog beam". A random access preamble is also referred to as a preamble, a random access preamble, or the like. Preconfiguration is equivalent to (pre)configuration, and may be predefinition or signaling configuration/indication between inter-satellite links.

"When", "assuming that", and "if" all mean that an apparatus performs corresponding processing in an objective situation, and are not intended to limit time, and the apparatus is not required to perform a determining action during implementation. This does not mean that there is another limitation. Unless otherwise specified, "if" and "assuming that" may be interchangeable, and "when" and "in a case in which" may be interchangeable. "When" and "if"/"assuming that" are interchangeable. Terms such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a relative concept in a specific manner. "Indication" may include direct indication and indirect indication. For example, when a piece of indication information indicates information I, the indication information may directly indicate I or indirectly indicate I, but it does not necessarily indicate that the indication information carries I.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are intended to distinguish between a plurality of objects, but are not intended to limit sizes, content, sequences, time sequences, priorities, importance, or the like of the plurality of objects. For example, a first satellite and a second satellite refer to two different satellites, and do not indicate different priorities, importance degrees, or the like between the two satellites. For a type of technical feature, technical features in the type of technical feature are distinguished by using "A", "B", "C", "D", and the like, and there is no sequence or order between the technical features described by "A", "B", "C", and "D". For example, a second satellite A and a second satellite B in this specification are merely intended to distinguish different content, and do not limit sequences or sizes of the second satellite A and the second satellite B, a priority, an importance degree, or the like.

The following describes in detail, with reference to the accompanying drawings, the solutions provided in embodiments of this application. In the following description, an example in which a communication method provided in embodiments of this application is applied to the network architecture shown in FIG. 1, FIG. 2, or FIG. 3 is used. A network architecture and an application scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new application scenario, the technical solutions provided in embodiments of this application are also applicable to similar technical problems.

The following uses an example in which communication methods (for example, a communication method 400, a communication method 600, and a communication method 800) provided in embodiments of this application are performed by a first satellite, a second satellite, and a terminal device. Steps performed by a satellite may be implemented by the satellite, or may be implemented by a component (for example, a module such as a baseband chip, another processing unit, or a processor) in the satellite. For example, the first satellite may be the anchor satellite in FIG. 3, or may be a chip (system) in the anchor satellite in FIG. 3. The second satellite may be any subordinate satellite in FIG. 3, or may be implemented by a chip (system) in the subordinate satellite in FIG. 3. Steps performed by the terminal device may be implemented by the terminal device, or may be implemented by a component (for example, a module such as a chip, a processing unit, or a processor) in the terminal device. The terminal device may be the terminal device shown in FIG. 3, or may be a chip (system) in the terminal device in FIG. 3.

FIG. 4 is a schematic flowchart of a communication method 400 according to an embodiment of this application. FIG. 4 describes the method from a perspective of interaction between a first satellite, a second satellite, and a terminal device. It should be understood that the communication method 400 may alternatively be implemented by another apparatus, for example, performed by a chip or a communication apparatus having a communication function. It should be noted that an example in which the method is performed by the first satellite, the second satellite, and the terminal device is merely used in this embodiment of this application, and quantities of second satellites and terminal devices are not limited. For example, in this embodiment of this application, the method may be further performed by more second satellites and more terminal devices. When more second satellites are involved, all of the second satellites perform a same procedure. As shown in FIG. 4, a procedure of the communication method 400 includes the following steps. In the communication method 400, how a plurality of second satellites send synchronization signals is essentially planned. Correspondingly, a synchronization index is an index of a synchronization signal. For ease of description, the following uses an example in which the synchronization signal is an SSB. Correspondingly, the synchronization index is an index of the SSB.

S401: The first satellite sends first information, where the first information includes synchronization information of at least one second satellite.

The first satellite is an anchor satellite of the terminal device, and the second satellite is a subordinate satellite within coverage of the first satellite. The example in FIG. 3 is still used. The at least one second satellite includes the subordinate satellite 1 to the subordinate satellite 4. Synchronization information of each second satellite may be used for synchronization between the terminal device and the second satellite, where the synchronization includes time synchronization and frequency synchronization. A specific name of the synchronization information is not limited in embodiments of this application. For example, the synchronization information may be referred to as a synchronization signal or an SSB.

The synchronization information of each second satellite may include at least one synchronization index (index) (which may be referred to as an index for short), and the synchronization index may indicate a synchronization signal to be sent by the corresponding second satellite. The example in FIG. 3 is still used. The subordinate satellite 1 is used as an example. A synchronization signal of the subordinate satellite 1 includes at least one synchronization index, and the at least one synchronization index is an index of an SSB sent by the subordinate satellite 1. Synchronization information of different second satellites may include a same quantity of synchronization indexes, or may include different quantities of synchronization indexes, and different second satellites correspond to different synchronization indexes. The first satellite may plan, for second satellites, indexes of SSBs to be sent and time periods for sending the SSBs, thereby reducing or even avoiding interference among SSBs sent by the second satellites. For example, synchronization information corresponding to the subordinate satellite 1 includes an SSB index 0 to an SSB index 3; synchronization information corresponding to the subordinate satellite 2 includes an SSB index 4 to an SSB index 8; and so on. In this way, compared with a case in which second satellites independently send SSBs according to respective plans of the second satellites, in this case, interference among SSBs sent by a plurality of second satellites can be reduced or even avoided.

Optionally, the at least one synchronization index may exist in the form of a table. In this case, the first information may include at least one list, one list corresponds to one second satellite, and one list includes at least one synchronization index. Alternatively, the first information may include an index of at least one list, and the terminal device may store a plurality of lists and indexes corresponding to the lists. In this case, after receiving the first information, each satellite may determine a corresponding list based on an index carried in the first information, and further determine at least one synchronization index included in the list. Alternatively, the terminal device may store a table indicating a plurality of synchronization index groups, each synchronization index group has a corresponding index, and one synchronization index group corresponds to one second satellite and includes at least one synchronization index, as shown in Table 1. Correspondingly, the first information may include an index, in the plurality of synchronization index groups, of at least one synchronization index group corresponding to at least one second satellite.

**Table 1**

| Index | Synchronization index group |
|---|---|
| 0 | Synchronization index 1, time period 2, time period 3, time period 4, and time period 5 |
| 1 | Synchronization index 1, time period 3, time period 6, time period 8, and time period 9 |
| 2 | Synchronization index 1, time period 5, time period 7, time period 8, and time period 11 |

It should be noted that a quantity of synchronization indexes in each synchronization index group in Table 1 is merely an example, and quantities of synchronization indexes in different synchronization index groups may be the same or may be different. In addition, a quantity of synchronization index groups in Table 1 is merely an example, and there may be more synchronization index groups. One or more synchronization indexes in different synchronization index groups are different.

In addition, the synchronization information of each second satellite may further include time information corresponding to the at least one synchronization index, and the time information may indicate a time period during which a second satellite sends a synchronization signal. The time information corresponding to the at least one synchronization index may be the same, or may be different. Time periods indicated by time information included in synchronization information of different second satellites may be the same, or may be different. For example, the first information includes synchronization information A of a second satellite A, the synchronization information A includes at least one synchronization index and at least one piece of time information, and the at least one piece of time information corresponds to the at least one synchronization index. For example, the at least one piece of time information may be one piece of time information, to indicate the second satellite A to send, during a time period indicated by the piece of time information, an SSB corresponding to the at least one synchronization index. Alternatively, the at least one piece of time information is in one-to-one correspondence with the at least one synchronization index, and each piece of time information indicates the second satellite to send, during a time period indicated by the piece of time information, an SSB indicated by a synchronization index corresponding to the piece of time information. For another example, the first information includes synchronization information A of a second satellite A and synchronization information B of a second satellite B, the synchronization information A includes at least one synchronization index and at least one piece of time information, and the synchronization information B includes at least one synchronization index and at least one piece of time information. One piece of time information in the synchronization information A corresponds to at least one synchronization index, and the at least one piece of time information in the synchronization information B corresponds to the at least one synchronization index. The at least one piece of time information in the synchronization information A may be the same as or different from the at least one piece of time information in the synchronization information B. Time information and synchronization indexes carried in synchronization information of the second satellites may be determined by the first satellite. In this way, different second satellites may send different SSBs, thereby reducing or even avoiding interference among SSBs of a plurality of second satellites. Alternatively, different second satellites send different SSBs during a same time period, or different second satellites send a same SSB at different time periods, so that interference among SSBs of a plurality of second satellites is reduced, and SSB resources can be saved, thereby ensuring coverage as much as possible.

In a possible implementation, the first satellite may send the first information in a unicast manner. First information sent each time includes synchronization information of one second satellite. For example, for the second satellite A, the first satellite sends first information to the second satellite A, where the first information includes the synchronization information of the second satellite A. For the second satellite B, the first satellite sends first information to the second satellite B, where the first information includes the synchronization information of the second satellite A. The first satellite sends the first information in a unicast manner, so that processing complexity of the second satellite for the first information can be reduced.

Alternatively, the first satellite may broadcast the first information, to reduce signaling overhead. In this case, each second satellite receives first information, and needs to determine, from at least one piece of synchronization information carried in the first information, a specific piece of synchronization information that belongs to the second satellite. Therefore, the first information may further include ephemeris information of the at least one second satellite, in other words, the first information includes at least one piece of synchronization information and identification information of the at least one second satellite, and one piece of synchronization information may correspond to identification information of one or more second satellites. After receiving the first information, each second satellite may determine synchronization information of the second satellite based on the identification information of the at least one second satellite and a correspondence between the identification information of the at least one second satellite and the at least one piece of synchronization information.

A specific implementation form of the identification information of the at least one second satellite is not limited in embodiments of this application. For example, the identification information of the at least one second satellite is the ephemeris information of the at least one second satellite. For another example, the identification information of the at least one second satellite is an ID of the at least one second satellite. For another example, the identification information of the at least one second satellite is an ID of at least one TRP, and one TRP corresponds to one second satellite.

S402: A second satellite sends a first synchronization signal. Correspondingly, a terminal device within coverage of the second satellite receives the first synchronization signal.

The second satellite in S402 is any one of the at least one second satellite. For ease of description, the following uses an example in which the second satellite is the second satellite A in the at least one second satellite. After receiving the first information, the second satellite A may obtain the synchronization information corresponding to the second satellite A, and send the first synchronization signal based on the synchronization information. If the first information is sent in a unicast manner, the second satellite A determines that the synchronization information carried in the first information is the synchronization information of the second satellite A. If the first information is sent in a broadcast manner, after receiving the first information, the second satellite A may determine the synchronization information of the second satellite A based on the identification information of the at least one second satellite in the first information and the correspondence between the identification information of the at least one second satellite and the at least one piece of synchronization information.

The second satellite A sends a synchronization signal based on the synchronization information of the second satellite A. For example, the at least one synchronization index included in the synchronization information of the second satellite A includes a second synchronization index, and the first synchronization signal includes the second synchronization index and ephemeris information (for example, second ephemeris information in this specification) corresponding to the second synchronization index. An example in which the first synchronization signal is a first SSB is used. If the at least one synchronization index includes a plurality of synchronization indexes, the first SSB sent by the second satellite A includes the plurality of synchronization indexes and a plurality of pieces of ephemeris information, and one synchronization index corresponds to one piece of ephemeris information. Alternatively, if the at least one synchronization index includes a plurality of synchronization indexes, the second satellite A sends a plurality of SSBs that are in one-to-one correspondence with the plurality of synchronization indexes, and each SSB includes a corresponding synchronization index and ephemeris information corresponding to the synchronization index. Synchronization indexes corresponding to different second satellites correspond to different ephemeris information. The second satellite A and another second satellite (for example, the second satellite B) are used as examples. The synchronization information of the second satellite A includes the second synchronization index, the second synchronization index corresponds to the second ephemeris information, the synchronization information of the second satellite B includes a third synchronization index, the third synchronization index corresponds to third ephemeris information, where the second ephemeris information is different from the third ephemeris information. Ephemeris information corresponding to a synchronization index may be carried in a first field in a system information block (system information block, SIB) included in an SSB. The first field may be an existing field in the SIB, or may be a newly added field.

Optionally, the second ephemeris information carried in a first SSB sent by the second satellite A may be represented by using an ID of the second satellite A or an ID of a TRP indicating the second satellite A. Therefore, that the first SSB includes the second synchronization index and the second ephemeris information may be replaced with that the first SSB includes the second synchronization index and the ID of the second satellite A, or the first SSB includes the second synchronization index and an ID of a second TRP, where the second TRP indicates the second satellite A. When the first BSS includes the second synchronization index and the ID of the second satellite A, the first satellite or the second satellite A may further broadcast, to the terminal device, a correspondence between the ID of the at least one second satellite and at least one piece of ephemeris information. In this way, the terminal device may determine, based on the received first SSB and the correspondence between the ID of the at least one second satellite and the at least one piece of ephemeris information, the second ephemeris information corresponding to the second synchronization index. Similarly, when the first BSS includes the second synchronization index and the ID of the second TRP, the first satellite or the second satellite A may further broadcast, to the terminal device, a correspondence between the ID of the at least one TRP and the at least one piece of ephemeris information.

In a possible implementation, the first SSB sent by the second satellite A may include the second synchronization index and an association relationship between the at least one synchronization index and the at least one piece of ephemeris information, where the association relationship is referred to as a first association relationship. Alternatively, that the first SSB includes the second synchronization index and the second ephemeris information includes: The first SSB includes the second synchronization index and the first association relationship. The first association relationship may be carried in a field in a SIB included in the first SSB. The first association relationship may also be broadcast by the first satellite. The first association relationship may exist in the form of a table, as shown in Table 2. In the first association relationship, one piece of ephemeris information may correspond to one or more synchronization indexes. It should be noted that a relationship between a synchronization index and ephemeris information in Table 2 is merely an example, and a value of N in Table 2 is greater than or equal to 2.

**Table 2**

| Synchronization index | Ephemeris information |
|---|---|
| 0 | Ephemeris information_0 |
| 1 | Ephemeris information_1 |
| ... | ... |
| N | Ephemeris information_N |

S403: The terminal device determines the second ephemeris information based on the first synchronization signal, and sends a random access preamble based on the second ephemeris information.

After receiving the first synchronization signal, the terminal device determines the second ephemeris information based on the first synchronization signal. For example, the first synchronization signal includes the second synchronization index and the second ephemeris information, and the terminal device may directly obtain the second ephemeris information from the first synchronization signal. If the first synchronization signal includes the second synchronization index and the first association relationship, the terminal device may determine, based on the second synchronization index and the first association relationship, the second ephemeris information corresponding to the second synchronization index. If the first synchronization signal includes the second synchronization index and the ID of the second satellite A, the terminal device may determine the second ephemeris information based on the ID of the second satellite A and the correspondence between the ID of the at least one second satellite and the at least one piece of ephemeris information.

After determining the second ephemeris information, the terminal device determines a TA value based on the second ephemeris information, and then sends the random access preamble based on the determined TA value, to access the second satellite A. It may be understood that, if the terminal device is located within coverage of the second satellite B, the terminal device may receive a synchronization signal from the second satellite B, determine ephemeris information of the second satellite B based on the received synchronization signal to obtain a TA value through calculation, and send the random access preamble based on the TA value, to access the second satellite B.

When the synchronization information of the second satellite A includes at least one synchronization index and time information corresponding to the at least one synchronization index, the second satellite A sends the first synchronization signal based on the time information included in the synchronization information. For example, if the synchronization information of the second satellite A includes the second synchronization index and time information corresponding to the second synchronization index, the second satellite A sends the first synchronization signal during a time period indicated by the time information, where the first synchronization signal includes the second synchronization index.

Due to movement of second satellites, the terminal device moves from coverage of a second satellite to coverage of another second satellite. For example, in an initial phase, the terminal device is located within coverage of the second satellite A. After a time period, the terminal device moves to coverage of a second satellite C. In this case, the terminal device needs to be handed over from the second satellite A to the second satellite C. To reduce interruption of communication services, the terminal device needs to be handed over from a cell of the second satellite A to a cell of the second satellite C, affecting data transmission performance of the terminal device. Therefore, in this embodiment of this application, a plurality of second satellites have a same cell identifier. In this way, when moving from coverage of a second satellite to coverage of another second satellite, the terminal device considers that a cell is unchanged, so that no cell handover procedure is performed, thereby reducing impact on data transmission performance of the terminal device. A specific implementation form of a cell identifier of a second satellite is not limited in embodiments of this application. For example, the cell identifier may be a physical cell identifier (physical cell identifier, PCI).

In the communication method 400, the first satellite plans indexes of SSBs sent by the second satellites and time periods for sending the SSBs, so that different second satellites send different SSBs, thereby reducing interference among SSBs of a plurality of second satellites. For example, different second satellites send different SSBs during a same time period, so that interference among SSBs of a plurality of second satellites is reduced, and SSB resources can be saved. For another example, different second satellites send a same SSB during different time periods, thereby reducing or even avoiding interference among SSBs of a plurality of second satellites.

It should be noted that, in the communication method 400, SSBs to be sent by the second satellites may alternatively be preconfigured. Therefore, S401 is an optional step, and is shown by using a dashed line in FIG. 4.

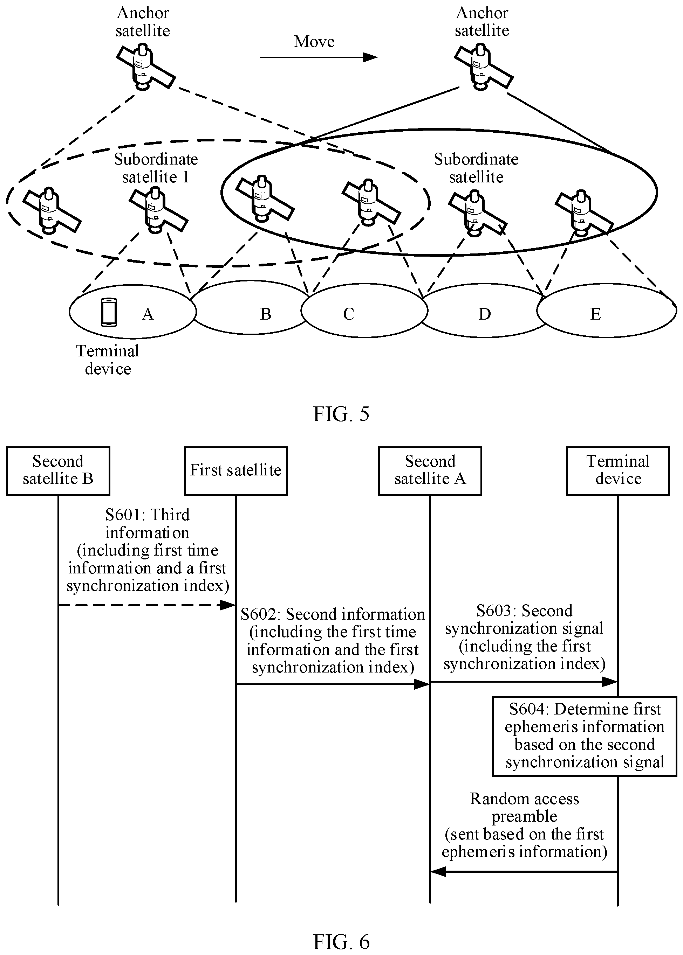

In a possible scenario, if an orbital altitude of a first satellite is higher than an orbital altitude of a second satellite, a movement speed of the first satellite relative to the ground is lower than a movement speed of the second satellite relative to the ground. With movement of the first satellite and the second satellite, a case in which the second satellite cannot provide a service for a terminal device occurs. For example, FIG. 5 is a diagram of a staring service in a satellite movement process according to an embodiment of this application. "Staring" refers to an operating mode of a payload (for example, a beam) in a satellite communication system. In a staring mode, a satellite dynamically adjusts a beam direction of the satellite by using technologies such as satellite attitude adjustment and phased array parameter adjustment, so that beams approximately cover a same area on the ground. As shown in FIG. 5, in an initial phase, a staring service area of an anchor satellite (that is, a first satellite in this specification) is an area indicated by a dashed line in the figure. After the anchor satellite and subordinate satellites (that is, second satellites) move by a distance, the staring service area of the anchor satellite is an area indicated by a solid line in the figure. For a terminal device, a second satellite that can originally provide a service for the terminal device may no longer provide a service for the terminal device. As shown in FIG. 5, the terminal device is located within coverage A of a subordinate satellite 1. As the subordinate satellite 1 moves, the terminal device is no longer within the coverage of the subordinate satellite 1. In this case, the subordinate satellite 1 can no longer provide a service for the terminal device.

For the case shown in FIG. 5, an embodiment of this application further provides a communication method. In the communication method, when a subordinate satellite cannot provide a service for a terminal device, an anchor satellite determines to replace the subordinate satellite that cannot provide a service with another subordinate satellite to continue to provide a service for the terminal device, thereby reducing impact on data transmission performance of the terminal device. FIG. 6 is a schematic flowchart of a communication method 600 according to an embodiment of this application. FIG. 6 describes the method from a perspective of interaction between a first satellite, a second satellite A, a second satellite B, and a terminal device. It should be understood that the communication method 600 may alternatively be implemented by another apparatus, for example, performed by a chip or a communication apparatus having a communication function.

S601: The second satellite B sends third information to the first satellite, and correspondingly, the first satellite receives the third information from the second satellite B.

The second satellite B cannot provide a service for the terminal device. That the second satellite B cannot provide a service for the terminal device includes: The second satellite B cannot provide a service for the terminal device during one or more time periods. Alternatively, that the second satellite B cannot provide a service for the terminal device includes: The second satellite B cannot provide a service based on one or more synchronization indexes. In other words, the second satellite B cannot send a synchronization signal including the one or more synchronization indexes. Alternatively, that the second satellite B cannot provide a service for the terminal device includes: The second satellite B cannot provide a service based on one or more synchronization indexes during one or more time periods. For ease of description, the following uses an example in which the second satellite B cannot send a synchronization signal including a first synchronization index during a time period indicated by first time information. The first time information may indicate one or more time periods, and the one or more time periods is not within a time period during which the second satellite B provides a service based on the first synchronization index. The first synchronization index may indicate one or more synchronization signals.

Due to reasons such as a limited antenna scanning range, the second satellite B cannot provide a service at a beam position of the first synchronization index. The beam position may be understood as an area within coverage of the second satellite B. The beam position of the first synchronization index may be understood as an area covered by the synchronization signal indicated by the first synchronization index. When the second satellite B determines that the first synchronization index is unavailable for providing a service during the time period indicated by the first time information, the second satellite B may notify the first satellite. For example, the second satellite B sends the third information to the first satellite, where the third information indicates a time period during which the second satellite B cannot provide a service and a synchronization index unavailable for providing a service. For example, the third information includes the first time information and the first synchronization index. Both the first time information and the first synchronization index may exist in the form of a table. Correspondingly, the third information may include a first list and a second list, where the first list includes the time period indicated by the first time information, and the second list includes the first synchronization index.

If the first satellite can learn of time periods during which second satellites within coverage cannot provide services and synchronization indexes unavailable for providing services, S601 does not need to be performed. In other words, S601 is an optional step, and is shown by using a dashed line in FIG. 6.

S602: The first satellite sends second information to the second satellite A, and correspondingly, the second satellite A receives the second information from the first satellite.

The second satellite A is a satellite that can provide a service for the terminal device in place of the second satellite B. The first satellite receives the third information from the second satellite B, and determines that the second satellite B cannot provide a service for the terminal device based on the first synchronization index during the time period indicated by the first time information. The first satellite determines a satellite (for example, the second satellite A) that can provide a service for the terminal device in place of the second satellite B. The second satellite A can provide a service for the terminal device based on the first synchronization index during the time period indicated by the first time information. After determining the second satellite A, the first satellite indicates the second satellite A to send, during the time period indicated by the first time information, the synchronization signal indicated by the first synchronization index. For example, the first satellite sends the second information to the second satellite A, where the second information includes the first time information and the first synchronization index, and indicates the second satellite A to send, during the time period indicated by the first time information, the synchronization signal indicated by the first synchronization index.

S603: The second satellite A sends a second synchronization signal, where the second synchronization signal includes the first synchronization index.

The second satellite A receives the second information from the first satellite, and sends the synchronization signal based on the second information. For example, the second satellite A sends the second synchronization signal during the time period indicated by the first time information, where the second synchronization signal includes the first synchronization index. Optionally, the second synchronization signal further includes first ephemeris information corresponding to the first synchronization index, in other words, the second synchronization signal includes the first synchronization index and the first ephemeris information. In this way, the terminal device receives the second synchronization signal, determines a TA value based on the first ephemeris information, and then sends a random access preamble based on the TA value, to access a network. For a specific implementation in which the second synchronization signal includes the first synchronization index and the first ephemeris information, refer to the foregoing specific implementation in which the first synchronization signal includes the second synchronization index and the second ephemeris information. For example, the second synchronization signal includes the first synchronization index, the second synchronization signal further includes a SIB, and the SIB carries an association relationship between at least one synchronization index and at least one piece of ephemeris information. Details are not described herein again. When sending the second synchronization signal, the second satellite A may update a stored first association relationship, and in an updated first association relationship, the first synchronization index corresponds to the first ephemeris information.

Similar to the second satellite B, when the second satellite A cannot provide a service based on one or more synchronization indexes during one or more time periods, the second satellite A may notify the first satellite. For example, the second satellite A may send fourth information to the first satellite, where the fourth information indicates a time period during which the second satellite A cannot provide a service and a synchronization index unavailable for providing a service. For example, the fourth information includes second time information and a third synchronization index, and the third synchronization index is unavailable for providing a service during a time period indicated by the second time information. Both the second time information and the third synchronization index may exist in the form of a table.

S604: The terminal device determines the first ephemeris information based on the second synchronization signal, and sends the random access preamble based on the first ephemeris information.

After receiving the second synchronization signal, the terminal device may obtain the first ephemeris information, determine the TA value based on the first ephemeris information, and then send the random access preamble based on the determined TA value, to access the second satellite A. For a specific implementation in which the terminal device obtains the first ephemeris information, refer to the specific implementation in which the terminal device receives the first synchronization signal and obtains the second ephemeris information in S403. Details are not described herein again.

In the communication method 600, when a subordinate satellite cannot provide a service for the terminal device, an anchor satellite determines to replace the subordinate satellite that cannot provide a service with another subordinate satellite to continue to provide a service for the terminal device, thereby reducing impact on data transmission performance of the terminal device.

The communication method 600 and the communication method 400 may be combined. For example, after S401 to S403 are performed, S601 to S603 may be performed. An execution sequence of steps S401 to S403 and S601 to S603 is not limited, and not all of the steps need to be performed. For example, S602, S603, S604, S401, S402, and S403 may be performed in sequence.

In a possible scenario, a terminal device has no data transmission requirement during a time period. If a satellite still sends a synchronization signal during the time period, it is unnecessary for the terminal device, and results in a resource waste and extra power consumption of the satellite. Therefore, an embodiment of this application further provides a communication method. In the communication method, an anchor satellite schedules, based on an actual requirement of a terminal device, an appropriate subordinate satellite to send a synchronization signal, so that unnecessary sending of synchronization signals can be reduced, thereby saving resources and reducing power consumption of satellites.

In this method, a random access resource for a first satellite may be (pre)configured. For ease of description, a set of random access resources of the first satellite is referred to as a first resource set. The first resource set may be partitioned into a plurality of resource subsets, where one resource subset corresponds to one second satellite, and one second satellite may correspond to one or more resource subsets. In this way, the first satellite may determine, based on a resource used for a first random access preamble received from the terminal device, coverage of a specific second satellite within which the terminal device is located, to schedule the second satellite to provide a service for the terminal device.

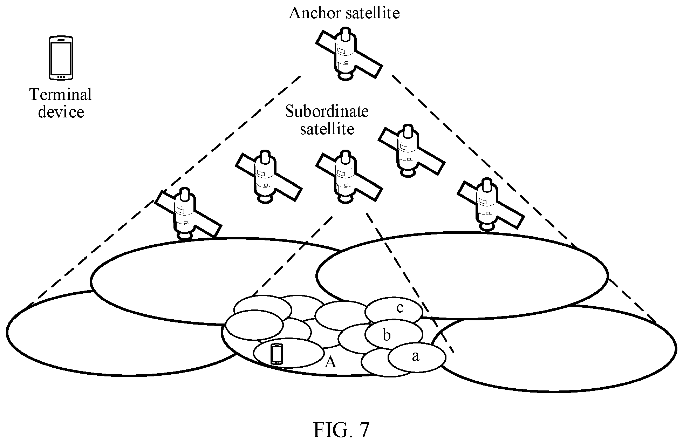

For ease of understanding, FIG. 7 is a diagram of an architecture of a satellite communication system according to an embodiment of this application. In FIG. 7, a projection of a beam of an anchor satellite on the ground is larger than projections of beams of a plurality of subordinate satellites on the ground, or beam positions of the subordinate satellites are nested within a beam position of the anchor satellite. In FIG. 7, an example in which a beam position A is a beam position of the anchor satellite, and a beam position a, a beam position b, and a beam position c are beam positions of the plurality of subordinate satellites under the anchor satellite is used. The beam position a, the beam position b, and the beam position c are nested within the beam position A. One beam position may correspond to one random access resource set. For example, the beam position A corresponds to one random access resource set, and the beam position a, the beam position b, and the beam position c each correspond to one random access resource set. The random access resource sets respectively corresponding to the beam a, the beam position b, and the beam position c are nested within the random access resource set corresponding to the beam position A. For example, the random access resource set corresponding to the beam position A is referred to as a random access resource set A, the random access resource set corresponding to the beam position a is referred to as a random access resource set a, the random access resource set corresponding to the beam position b is referred to as a random access resource set b, and the random access resource set corresponding to the beam position c is referred to as a random access resource set c. The random access resource set a, the random access resource set b, and the random access resource set c are subsets of the random access resource set A. In addition, the random access resource set a, the random access resource set b, and the random access resource set c do not overlap each other. If a random access resource set used by a terminal device corresponds to a beam position of a subordinate satellite, the anchor satellite may determine that the subordinate satellite can provide a service for the terminal device.

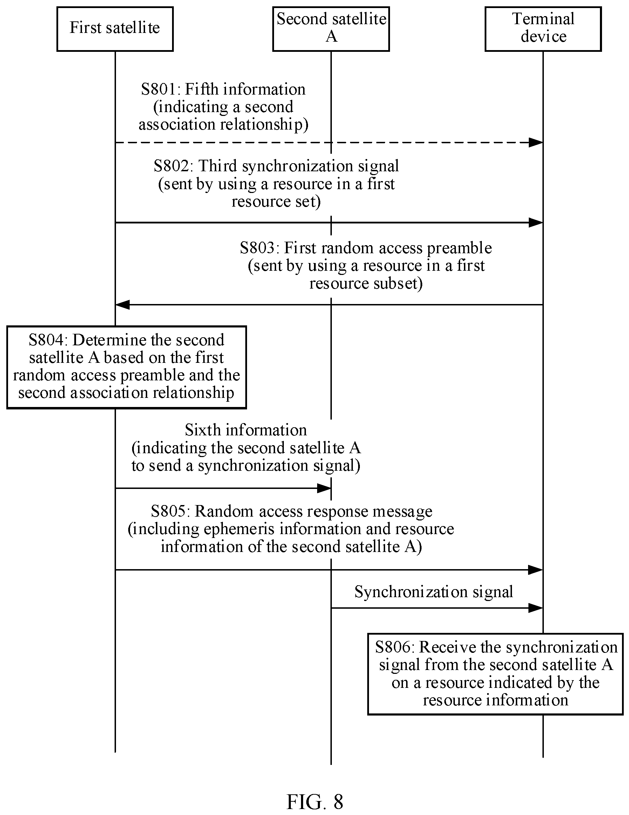

For example, FIG. 8 is a schematic flowchart of a communication method 800 according to an embodiment of this application. FIG. 8 describes the method from a perspective of interaction between a first satellite, a second satellite A, and a terminal device. It should be understood that the communication method 800 may alternatively be implemented by another apparatus, for example, performed by a chip or a communication apparatus having a communication function.

S801: The first satellite sends fifth information to the terminal device, and correspondingly, the terminal device receives the fifth information from the first satellite.

The fifth information indicates a second association relationship, and the second association relationship includes an association relationship between a plurality of resource subsets and a first resource set. The first resource set may be a set of random access resources of the first satellite, or may be a set of random access resources corresponding to a beam position of the first satellite. The plurality of resource subsets may be a plurality of resource subsets obtained by partitioning the first resource set, or may be a part of the resource subsets obtained by partitioning the first resource set. One resource subset corresponds to one second satellite, and one second satellite may correspond to a plurality of resource subsets, as shown in Table 3. In Table 3, the first resource set may be a set of random access resources of the first satellite, or may be a set of random access resources corresponding to a beam position of the first satellite. The second association relationship may be an association relationship shown in Table 3, or may be an association relationship shown in the first two columns in Table 3.

**Table 3**

| First satellite | | Second satellite |
|---|---|---|
| First resource set | First resource subset | Second satellite A |
| | Second resource subset | Second satellite A |
| | Third resource subset | Second satellite B |
| ... | ... | ... |

An example in which the first resource set in Table 3 is a random access resource set corresponding to a beam position A of the first satellite is used. A beam position a, a beam position b, and a beam position c are nested within the beam position A. An example in which the first resource subset is a random access resource set of the beam position a nested within the beam position A, the second resource subset is a random access resource set of the beam position b nested within the beam position A, and the third resource subset is a random access resource set of the beam position c nested within the beam position A is used. The beam position a corresponds to the second satellite A, a beam position b corresponds to the second satellite A, and the beam position c corresponds to the second satellite B. The first resource subset, the second resource subset, and the third resource subset are subsets of the first resource set, and the first resource subset, the second resource subset, and the third resource subset do not overlap each other. That the resource sets do not overlap herein means that resources in the sets are different in at least one of the following three dimensions: time domain, frequency domain, and code domain. The first resource subset and the second resource subset are used as examples. Resources in the first resource subset and resources in the second resource subset are the same in time domain and frequency domain, but correspond to different sequences; or resources in the first resource subset and resources in the second resource subset are the same in time domain, and correspond to a same sequence, but are different in frequency domain; or resources in the first resource subset and resources in the second resource subset correspond to a same sequence, and are the same in frequency domain, but are different in time domain; or resources in the first resource subset and resources in the second resource subset are different in time domain and frequency domain, but correspond to a same sequence or different sequences; and so on.

The second association relationship may be preconfigured, and the terminal device and the first satellite may store the second association relationship shown in Table 3. In this case, S801 does not need to be performed, in other words, S801 is an optional step, and is shown by using a dashed line in FIG. 8. Alternatively, the second association relationship may be sent by the first satellite to the terminal device. For example, the first satellite may send a synchronization signal to the terminal device, where the synchronization signal includes indication information of the second association relationship. For example, the synchronization signal is an SSB, and the indication information may be carried in a SIB.

S802: The first satellite sends a third synchronization signal, and correspondingly, the terminal device receives the third synchronization signal.

That the first satellite sends the third synchronization signal includes: The first satellite broadcasts the third synchronization signal. The first satellite may send the third synchronization signal by using a resource in the first resource set. Therefore, after receiving the third synchronization signal, the terminal device may determine, based on the third synchronization signal, that the resource for sending the third synchronization signal is from the first resource set.

S803: The terminal device sends a first random access preamble, and correspondingly, the first satellite receives the first random access preamble from the terminal device.

When the terminal device has a data transmission requirement, the terminal device may request to access a network. For example, the terminal device may send the first random access preamble. The first satellite receives the first random access preamble from the terminal device, and determines that the terminal device has a data transmission requirement. In this case, the first satellite may determine a specific second satellite to be scheduled to serve the terminal device, and does not need to schedule all second satellites to send synchronization signals, thereby saving resources and reducing power consumption of other second satellites.

The terminal device may send the first random access preamble based on the second association relationship. For example, based on the relationship shown in Table 3, the terminal device may randomly select, from a resource subset corresponding to a beam position of the terminal device, a resource for sending the first random access preamble. For example, the terminal device is at a beam position covered by the second satellite A, and the terminal device may randomly select, from the first resource subset or the second resource subset, a resource for sending the first random access preamble.

S804: The first satellite determines the second satellite A based on the first random access preamble and the second association relationship.

The second satellite A is a terminal device that provides a service for the terminal device in a plurality of second satellites in a system. The second association relationship further includes an association relationship between the plurality of resource subsets and the plurality of second satellites, as shown in Table 3. It can be learned from Table 3 that each resource subset has a corresponding second satellite. Therefore, the first satellite may determine, based on the second association relationship shown in Table 3 and the random access preamble sent by the terminal device, a second satellite that can provide a service for the terminal device, and further schedule the second satellite. For example, if the terminal device sends the first random access preamble, and the first random access preamble belongs to the first resource subset, the second satellite that can provide a service for the terminal device is the second satellite A.

After determining the second satellite A, the first satellite may schedule the second satellite A to send a synchronization signal. For example, the first satellite may send sixth information to the second satellite A, where the sixth information may indicate the second satellite A to send the synchronization signal. For example, the sixth information includes related information for the second satellite A to send the synchronization signal, for example, information about a resource used by the second satellite A to send the synchronization signal. The second satellite A receives the sixth information, and sends the synchronization signal based on the sixth information.

S805: The first satellite sends a random access response message to the terminal device, and correspondingly, the terminal device receives the random access response message.

The random access response message includes ephemeris information and resource information of the second satellite A, and the resource information indicates the resource for the second satellite A to send the synchronization signal. The ephemeris information of the second satellite A may be information associated with the ephemeris information of the second satellite A, provided that the terminal device can determine the ephemeris information of the second satellite A based on the information. For example, the ephemeris information of the second satellite A includes an ID of the second satellite A, an ID of a TRP corresponding to the second satellite A, or a PCI of a cell of the second satellite A. An association relationship between one or more of the foregoing information and the ephemeris information of the second satellite A may be sent by the first satellite to the terminal device, or the first satellite and the terminal device may agree on the association relationship.

The resource information may be replaced with the related information for the second satellite A to send the synchronization signal. In this way, that the random access response message includes the ephemeris information and the resource information of the second satellite A may be replaced with that the random access response message includes the ephemeris information of the second satellite A and seventh information. The sixth information is the related information for the second satellite A to send the synchronization signal. For example, the seventh information includes the resource information, and the resource information indicates the resource used by the second satellite A to send the synchronization signal. The resource information may include one or more of information about a time domain resource occupied by the synchronization signal, information about a frequency domain resource occupied by the synchronization signal, a center frequency of the synchronization signal, or a time domain offset value and/or a frequency domain offset value of the synchronization signal of the second satellite A relative to a synchronization signal of the first satellite.

S806: The terminal device receives the synchronization signal from the second satellite A on the resource indicated by the resource information.

After receiving the random access response message, the terminal device may determine the resource used by the second satellite A to send the synchronization signal, that is, the resource indicated by the resource information, and further receive the synchronization signal from the second satellite A on the resource indicated by the resource information, to access the network.

In the communication method 800, the first satellite may be schedule, based on an actual requirement of the terminal device, an appropriate second satellite to send a synchronization signal. When the terminal device has no information transmission requirement, there is no need to schedule any second satellite within coverage, thereby saving resources and reducing power consumption of the second satellite.

The communication method 800 may be combined with the communication method 400 and the communication method 600. For example, the communication method 800 and the communication method 400 may be combined with each other, the communication method 800 and the communication method 600 may be combined with each other, or the communication method 800, the communication method 400, and the communication method 600 may be combined with each other.

In the foregoing embodiments provided in this application, the method provided in embodiments of this application is described by using an example in which a satellite (for example, a first satellite and/or a second satellite) and a terminal device perform the method. In this application, embodiments may be independently implemented or may be implemented in combination based on some internal relationships. In each embodiment, different implementations may be implemented in combination or independently. To implement the functions in the method provided in the foregoing embodiments of this application, the steps performed by the terminal device may be implemented by different functional entities included in the terminal device. The steps performed by the satellite may be implemented by different functional entities included in the satellite. To implement the functions in the method provided in embodiments of this application, the terminal device and the satellite may include a hardware structure and/or a software module, to implement the functions in the form of a hardware structure, a software module, or a combination of the hardware structure and the software module. Whether a function in the foregoing functions is performed by using the hardware structure, the software module, or the combination of the hardware structure and the software module depends on particular applications and design constraint conditions of the technical solutions.

Based on a same inventive concept as the method embodiments, an embodiment of this application provides a communication apparatus. The following describes, with reference to accompanying drawings, communication apparatuses configured to implement the foregoing methods in embodiments of this application. All the foregoing content may be used in the following embodiments. Repeated content is not described again.

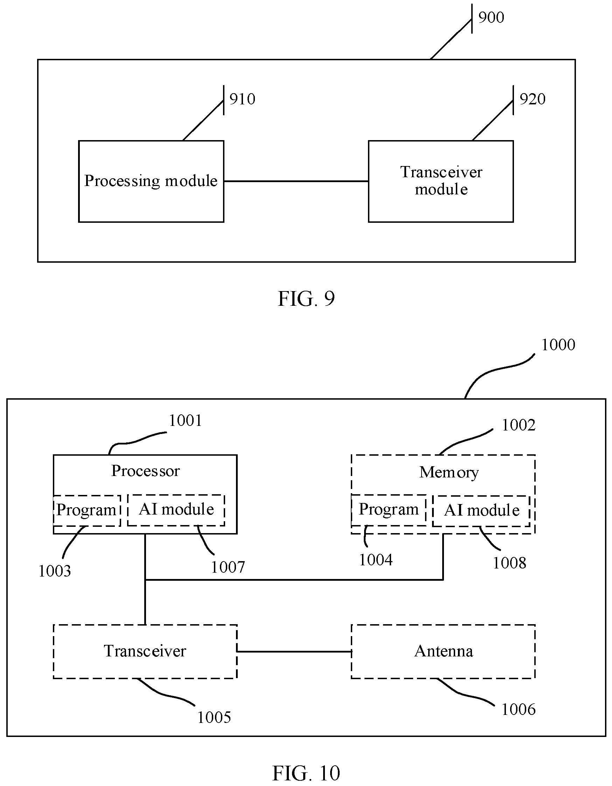

FIG. 9 is a block diagram of a communication apparatus 900 according to an embodiment of this application. The communication apparatus 900 may be the terminal device or the satellite in the foregoing embodiment. For example, the communication apparatus 900 may be the terminal device in FIG. 1, or the communication apparatus 900 is a chip (system) in the terminal device, or the communication apparatus 900 is a software module of the terminal device. The communication apparatus 900 may correspondingly implement functions or steps implemented by the terminal device in the foregoing method embodiments. For another example, the communication apparatus 900 may be a satellite in FIG. 1, or the communication apparatus 900 is a chip (system) in the satellite, or the communication apparatus 900 is a software module of the satellite. The communication apparatus 900 may correspondingly implement functions or steps implemented by the first satellite or the second satellite in the foregoing method embodiments. The communication apparatus 900 may include a processing module 910 and a transceiver module 920. Optionally, the communication apparatus may further include a storage module. The storage module may be configured to store instructions (code or a program) and/or data. The storage module may be, for example, a memory. The processing module 910 and the transceiver module 920 may be coupled to the storage module. For example, the processing module 910 may read the instructions (the code or the program) and/or the data in the storage module, to implement a corresponding method. When the communication apparatus 900 is a chip in the terminal device or the satellite, the storage module may be a storage module, for example, a register or a cache, in the chip. For example, the storage module may alternatively be a storage module that is within the terminal device/satellite and that is located outside the chip, for example, a read-only memory (read-only memory, ROM), another type of static storage device that can store static information and instructions, or a random access memory (random access memory, RAM). The foregoing units may be independently disposed, or may be partially or completely integrated.

The processing module 910 may be a processor or a controller, for example, may be a general-purpose central processing unit (central processing unit, CPU), a general-purpose processor, digital signal processor (digital signal processing, DSP), an application specific integrated circuit (application specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 920 is a transceiver, an interface circuit, a bus, a pin, or another possible communication interface, and is configured to receive a signal from another apparatus. For example, when the apparatus is implemented in the form of a chip, the transceiver module 920 is an interface circuit used by the chip to receive a signal from another chip or apparatus, or is an interface circuit used by the chip to send a signal to another chip or apparatus.

In an implementation, the communication apparatus 900 can correspondingly implement behaviors and functions of the first satellite in the foregoing method embodiments. The communication apparatus 900 may be a satellite, or may be a component (for example, a chip or a circuit) used in the satellite, or may be a chip or a chip group in the satellite, or may be a part of the chip that is configured to perform a related method function, or may be a software module that can implement a method performed by the first satellite in the foregoing method (for example, the communication method 400 and/or the communication method 600, or the communication method 800). This is not limited. For details, refer to the related content in the foregoing method embodiments. Details are not described herein again.

For example, the processing module 910 may be configured to determine first information, where the first information includes synchronization information of at least one second satellite, and synchronization information of each second satellite includes at least one synchronization index. The transceiver module 920 is configured to send the first information.

In an optional implementation, the synchronization information of each second satellite further includes a time period corresponding to the at least one synchronization index.

In an optional implementation, the first information further includes ephemeris information of the at least one second satellite, identification information of the at least one second satellite, or identification information of at least one TRP, where one TRP corresponds to one second satellite.

In an optional implementation, the at least one second satellite includes a plurality of second satellites, and the plurality of second satellites correspond to a same cell identifier.

In an optional implementation, the transceiver module 920 is further configured to send second information to a second satellite A in the plurality of second satellites, where the second information includes first time information and a first synchronization index, and indicates the second satellite A to send, during a time period indicated by the first time information, a synchronization signal indicated by the first synchronization index. The time period indicated by the first time information is not within a time period during which a second satellite B in the plurality of second satellites provides a service based on the first synchronization index.

In an optional implementation, the transceiver module 920 is further configured to cause the first satellite to receive third information from the second satellite B, where the third information includes the first time information and the first synchronization index.

For another example, the transceiver module 920 is configured to: send a third synchronization signal by using a resource in a first resource set; and receive a first random access preamble from the terminal device. The processing module 910 is configured to determine the second satellite A based on the first random access preamble and a second association relationship, where the second association relationship includes an association relationship between a plurality of resource subsets and the plurality of second satellites. A resource for the first random access preamble belongs to a first resource subset in the plurality of resource subsets, and the second satellite A belongs to the plurality of second satellites. The transceiver module 920 is further configured to send a random access response message to the terminal device, where the random access response message includes ephemeris information and resource information of the second satellite A, and the resource information indicates a resource for the second satellite A to send the synchronization signal.

In an optional implementation, the transceiver module 920 is further configured to send fifth information, where the fifth information indicates a second association relationship, the second association relationship further includes an association relationship between the plurality of resource subsets and the first resource set, and the plurality of resource subsets are obtained by partitioning the first resource set.

In an implementation, the communication apparatus 900 can correspondingly implement behaviors and functions of the second satellite (for example, the second satellite A or the second satellite B) in the foregoing method embodiments. The communication apparatus 900 may be a satellite, or may be a component (for example, a chip or a circuit) used in the satellite, or may be a chip or a chip group in the satellite, or may be a part of the chip that is configured to perform a related method function, or may be a software module that can implement a method performed by the satellite in the foregoing method (for example, the communication method 400 and/or the communication method 600, or the communication method 800). This is not limited. For details, refer to the related content in the foregoing method embodiments. Details are not described herein again.

For example, the processing module 910 is configured to determine a first synchronization signal, where the first synchronization signal includes a second synchronization index, the second synchronization index is associated with second ephemeris information, and the second ephemeris information is different from ephemeris information associated with a synchronization index corresponding to another second satellite.

The transceiver module 920 is configured to send the first synchronization signal.

In an optional implementation, the first synchronization signal further includes the second ephemeris information or a first association relationship, where the first association relationship is an association relationship between at least one synchronization index and at least one piece of ephemeris information.

In an optional implementation, the transceiver module 920 is further configured to receive first information from a first satellite, where the first information includes synchronization information of at least one second satellite, and synchronization information of each second satellite includes at least one synchronization index.

In an optional implementation, the synchronization information of each second satellite further includes a time period corresponding to the at least one synchronization index.

In an optional implementation, the first information further includes ephemeris information of the at least one second satellite, identification information of the at least one second satellite, or identification information of at least one TRP, where one TRP corresponds to one second satellite.

In an optional implementation, the transceiver module 920 is further configured to: receive second information from the first satellite; and send a second synchronization signal during a time period indicated by first time information, where the second synchronization signal includes a first synchronization index. The second information includes the first time information and the first synchronization index, and indicates the second satellite to send, during the time period indicated by the first time information, a synchronization signal indicated by the first synchronization index. The time period indicated by the first time information is not within a time period during which another second satellite provides a service based on the first synchronization index.

In an optional implementation, the transceiver module 920 is further configured to send fourth information to the first satellite, where the fourth information includes second time information and a third synchronization index, and the third synchronization index is unavailable for providing a service during a time period indicated by the second time information.

In an implementation, the communication apparatus 900 can correspondingly implement behaviors and functions of the terminal device in the foregoing method embodiments. The communication apparatus 900 may be a terminal device, may be a component (for example, a chip or a circuit) used in the terminal device, may be a chip or a chip group in the terminal device or a part of the chip that is configured to perform a related method function, or may be a software module that can implement the method performed by the terminal device in the foregoing method (for example, the communication method 400 and/or the communication method 600, or the communication method 800). This is not limited. For details, refer to the related content in the foregoing method embodiments. Details are not described herein again.

For example, the transceiver module 920 is configured to receive a first synchronization signal, where the first synchronization signal includes a second synchronization index. The processing module 910 is configured to: determine second ephemeris information based on the second synchronization index and a first association relationship; determine a TA value based on the second ephemeris information; and send a random access preamble based on the TA value. The first association relationship is an association relationship between at least one synchronization index and at least one piece of ephemeris information.

For another example, the transceiver module 920 is configured to: receive a third synchronization signal from the first satellite; send a first random access preamble to the first satellite; receive a random access response message; and receive a synchronization signal from the second satellite on a resource indicated by resource information. The third synchronization signal is sent by using a resource in a first resource set. The random access response message includes ephemeris information and resource information of the second satellite, and the resource information indicates a resource for the second satellite A to send a synchronization signal.

In an optional implementation, the processing module 910 is further configured to: determine a first resource subset based on the first resource set and a second association relationship, where the second association relationship includes an association relationship between the first resource set and a plurality of resource subsets, the plurality of resource subsets are obtained by partitioning the first resource set, and the first resource subset belongs to the plurality of resource subsets. The transceiver module 920 is specifically configured to send the first random access preamble to the first satellite by using a resource in the first resource subset.

When the communication apparatus 900 is a chip-type apparatus or circuit, the transceiver module may be an input/output circuit and/or a communication interface, and the processing module is an integrated processor, a microprocessor, or an integrated circuit.

FIG. 10 is a block diagram of a communication apparatus 1000 according to an embodiment of this application. The communication apparatus 1000 may be the terminal device or a satellite (for example, the first satellite or the second satellite) in the foregoing embodiments. For example, the communication apparatus 1000 may be the terminal device in FIG. 1 or a chip (system) in the terminal device. In this embodiment of this application, the chip system may include a chip, or may include the chip and another discrete component. For a specific function, refer to the descriptions of the foregoing method embodiments. For another example, the communication apparatus 1000 may be a satellite in FIG. 1 or a chip (system) in the satellite. In this embodiment of this application, the chip system may include a chip, or may include the chip and another discrete component. For a specific function, refer to the descriptions of the foregoing method embodiments.

The communication apparatus 1000 includes one or more processors 1001, configured to implement or support the communication apparatus 1000 in implementing the function of the terminal device or the satellite in the method provided in embodiments of this application. For details, refer to the detailed descriptions in the method example. Details are not described herein again. The processor 1001 may also be referred to as a processing unit or a processing module, and may implement a specific control function. The processor 1001 may be a general-purpose processor, a dedicated processor, or the like. For example, the processor 1001 includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to: control the communication apparatus 1000 (for example, a satellite or a terminal device); execute a software program; and/or process data. Different processors may be independent devices, or may be integrated into one or more processors, for example, integrated into one or more application specific integrated circuits.

In a design, the processor 1001 may include a program 1003 (which may also be sometimes referred to as code or instructions). The program 1003 may be run on the processor 1001, to cause the communication apparatus 1000 to perform the method described in the foregoing embodiments. In another possible design, the communication apparatus 1000 includes a circuit (not shown in FIG. 10), and the circuit is configured to implement the function of the terminal device or the satellite in the foregoing embodiments.

In a design, the communication apparatus 1000 may include one or more memories 1002, and a program 1004 (which may also be sometimes referred to as code or instructions) is stored in the one or more memories 1002. The program 1004 may be run on the processor 1001, to cause the communication apparatus 1000 to perform the method described in the foregoing method embodiments.

In a design, the processor 1001 and/or the memory 1002 may include an artificial intelligence (artificial intelligence, AI) module 1007 and an AI module 1008. The AI modules are configured to implement an AI-related function. The AI module may be implemented by software, hardware, or a combination of the software and the hardware. For example, the AI module may include a RAN intelligent controller (RAN intelligent controller, RIC) module. For example, the AI module may be a near-real-time RIC or a non-real-time RIC.

In a possible design, the processor 1001 and/or the memory 1002 may further store data. The processor and the memory may be separately disposed, or may be integrated together.

In a possible design, the communication apparatus 1000 may further include a transceiver 1005 and/or an antenna 1006. The processor 1001 may also be sometimes referred to as a processing unit, and controls the communication apparatus 1000. The transceiver 1005 may also be sometimes referred to as a transceiver unit, a transceiver machine, a transceiver circuit, a transceiver device, or the like, and is configured to implement a transceiver function of the communication apparatus 1000 through the antenna 1006.

In a possible design, the communication apparatus 1000 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1000 may include more or fewer components, some components are integrated, or some components are split. The components may be implemented by hardware, software, or a combination of the software and the hardware.

The communication apparatus in the foregoing embodiments may be a terminal device, may be a circuit, or may be a chip used in the terminal device, or another combined device or component that has the foregoing terminal device. Alternatively, the communication apparatus in the foregoing embodiments may be a network device, or may be a circuit, or may be a chip used in a satellite, or may be another combined device or component that has the foregoing network device. When the communication apparatus is the terminal device or the satellite, the transceiver module may be a transceiver, and may include an antenna, a radio frequency circuit, and the like. The processing module may be a processor, for example, a CPU. When the communication apparatus is a chip system, the communication apparatus may be an FPGA, a dedicated ASIC, a system on chip (system on chip, SoC), a CPU, a network processor (network processor, NP), a DSP, a microcontroller unit (microcontroller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and a transceiver machine.

An embodiment of this application further provides a communication system. Specifically, the communication system includes a plurality of satellites and at least one terminal device. The terminal device is a terminal device configured to implement a related function of at least one of the communication method 400, the communication method 600, and the communication method 800. The plurality of satellites include a first satellite and a second satellite. The first satellite is a satellite configured to implement a related function of at least one of the communication method 400, the communication method 600, and the communication method 800. The second satellite is a satellite configured to implement a related function of at least one of the communication method 400, the communication method 600, and the communication method 800. For details, refer to related descriptions in the foregoing method embodiments. Details are not described herein again.

An embodiment of this application further provides a computer-readable storage medium, including instructions. When the instructions are run on a computer, the computer is caused to perform the method performed by the terminal device, the first satellite, or the second satellite in at least one of the communication method 400, the communication method 600, and the communication method 800.

An embodiment of this application further provides a computer program product, including computer program code. When the computer program code is executed, a computer is caused to perform the method performed by the terminal device, the first satellite, or the second satellite in at least one of the communication method 400, the communication method 600, and the communication method 800.

An embodiment of this application provides a chip system. The chip system includes a processor, may further include a memory, and is configured to implement functions of the terminal device, the first satellite, or the second satellite in at least one of the foregoing communication method 400, the communication method 600, and the communication method 800. The chip system may include a chip, or may include the chip and another discrete component.

To implement the functions of the communication apparatuses in FIG. 9 and FIG. 10, an embodiment of this application further provides a chip, including a processor. The chip is configured to support the communication apparatus in implementing the functions of the terminal device or the satellite in the foregoing method embodiments. In a possible design, the chip is connected to a memory, or the chip includes the memory. The memory is configured to store a computer program or instructions and data that are necessary for the communication apparatus.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in the form of a software product. The computer software product is stored in a storage medium, and includes several instructions for causing a computer device (which may be a personal computer, a server, a network device, or the like) to perform all or a part of steps of the methods in embodiments of this application. The foregoing storage medium includes any medium that can store program code, such as a USB flash drive, a removable hard disk, a ROM, a RAM, a magnetic disk, or an optical disc.

It is clear that a person skilled in the art can make various modifications and variations to this application without departing from the scope of this application. This application is intended to cover these modifications and variations of this application provided that these modifications and variations fall within the scope of protection defined by the following claims in this application and equivalent technologies thereof.

## Claims

1. A communication method, applied to a first satellite, and comprising:
determining first information, wherein the first information comprises synchronization information of at least one second satellite, and synchronization information of each second satellite comprises at least one synchronization index; and
sending the first information.

2. The method according to claim 1, wherein the synchronization information of each second satellite further comprises a time period corresponding to the at least one synchronization index.

3. The method according to claim 1 or 2, wherein the first information further comprises:
ephemeris information of the at least one second satellite; or
identification information of the at least one second satellite; or
identification information of at least one transmission reception point TRP, wherein one TRP corresponds to one second satellite.

4. The method according to any one of claims 1 to 3, wherein the at least one second satellite comprises a plurality of second satellites, and the plurality of second satellites correspond to a same cell identifier.

5. The method according to claim 4, wherein the method further comprises:
sending second information to a second satellite A in the plurality of second satellites, wherein the second information comprises first time information and a first synchronization index, and indicates the second satellite A to send, during a time period indicated by the first time information, a synchronization signal indicated by the first synchronization index, and the time period indicated by the first time information is not within a time period during which a second satellite B in the plurality of second satellites provides a service based on the first synchronization index.

6. The method according to claim 5, wherein the method further comprises:
receiving third information from the second satellite B, wherein the third information comprises the first time information and the first synchronization index.

7. A communication method, applied to a second satellite, and comprising:
determining a first synchronization signal, wherein the first synchronization signal comprises a second synchronization index, the second synchronization index is associated with the second ephemeris information, and the second ephemeris information is different from ephemeris information associated with a synchronization index corresponding to another second satellite; and
sending the first synchronization signal.

8. The method according to claim 7, wherein the first synchronization signal further comprises:
the second ephemeris information; or
a first association relationship, wherein the first association relationship is an association relationship between at least one synchronization index and at least one piece of ephemeris information.

9. The method according to claim 7 or 8, wherein the method further comprises:
receiving first information from a first satellite, wherein the first information comprises synchronization information of at least one second satellite, and synchronization information of each second satellite comprises at least one synchronization index.

10. The method according to claim 9, wherein the synchronization information of each second satellite further comprises a time period corresponding to the at least one synchronization index.

11. The method according to claim 9 or 10, wherein the first information further comprises:
ephemeris information of the at least one second satellite; or
identification information of the at least one second satellite; or
identification information of at least one transmission reception point TRP, wherein one TRP corresponds to one second satellite.

12. The method according to claim 9 or 10, wherein the method further comprises:
receiving second information from the first satellite, wherein the second information comprises first time information and a first synchronization index, and indicates the second satellite to send, during a time period indicated by the first time information, a synchronization signal indicated by the first synchronization index, and the time period indicated by the first time information is not within a time period during which another second satellite provides a service based on the first synchronization index; and
sending a second synchronization signal during the time period indicated by the first time information, wherein the second synchronization signal comprises the first synchronization index.

13. The method according to claim 12, wherein the method further comprises:
sending fourth information to the first satellite, wherein the fourth information comprises second time information and a third synchronization index, and the third synchronization index is unavailable for providing a service during a time period indicated by the second time information.

14. A communication method, applied to a terminal device, and comprising:
receiving a first synchronization signal, wherein the first synchronization signal comprises a second synchronization index;
determining second ephemeris information based on the second synchronization index and a first association relationship, wherein the first association relationship is an association relationship between at least one synchronization index and at least one piece of ephemeris information;
determining a timing advance TA value based on the second ephemeris information; and
sending a random access preamble based on the timing advance value.

15. A communication method, applied to a first satellite, and comprising:
sending a third synchronization signal by using a resource in a first resource set;
receiving a first random access preamble from a terminal device;
determining a second satellite A based on the first random access preamble and a second association relationship, wherein the second association relationship comprises an association relationship between a plurality of resource subsets and a plurality of second satellites, a resource for the first random access preamble belongs to a first resource subset in the plurality of resource subsets, and the second satellite A belongs to the plurality of second satellites; and
sending a random access response message to the terminal device, wherein the random access response message comprises ephemeris information and resource information of the second satellite A, and the resource information indicates a resource for the second satellite A to send a synchronization signal.

16. The method according to claim 15, wherein the method further comprises:
sending fifth information, wherein the fifth information indicates the second association relationship, the second association relationship further comprises an association relationship between the plurality of resource subsets and the first resource set, and the plurality of resource subsets are obtained by partitioning the first resource set.

17. A communication method, applied to a terminal device, and comprising:
receiving a third synchronization signal from a first satellite, wherein the third synchronization signal is sent by using a resource in a first resource set;
sending a first random access preamble to the first satellite;
receiving a random access response message, wherein the random access response message comprises ephemeris information and resource information of a second satellite, and the resource information indicates a resource for the second satellite to send a synchronization signal; and
receiving the synchronization signal from the second satellite on the resource indicated by the resource information.

18. The method according to claim 17, wherein the method further comprises:
determining a first resource subset based on the first resource set and a second association relationship, wherein the second association relationship comprises an association relationship between the first resource set and a plurality of resource subsets, the plurality of resource subsets are obtained by partitioning the first resource set, and the first resource subset belongs to the plurality of resource subsets; and
sending the first random access preamble to the first satellite comprises: sending the first random access preamble to the first satellite by using a resource in the first resource subset.

19. A communication apparatus, comprising:
a processing module, configured to determine first information, wherein the first information comprises synchronization information of at least one second satellite, and synchronization information of each second satellite comprises at least one synchronization index; and
a transceiver module, configured to send the first information.

20. The apparatus according to claim 19, wherein the synchronization information of each second satellite further comprises a time period corresponding to the at least one synchronization index.

21. The apparatus according to claim 19 or 20, wherein the first information further comprises:
ephemeris information of the at least one second satellite; or
identification information of the at least one second satellite; or
identification information of at least one transmission reception point TRP, wherein one TRP corresponds to one second satellite.

22. The apparatus according to any one of claims 19 to 21, wherein the at least one second satellite comprises a plurality of second satellites, and the plurality of second satellites correspond to a same cell identifier.

23. The apparatus according to claim 22, wherein the transceiver module is further configured to:
send second information to a second satellite A in the plurality of second satellites, wherein the second information comprises first time information and a first synchronization index, and indicates the second satellite A to send, during a time period indicated by the first time information, a synchronization signal indicated by the first synchronization index, and the time period indicated by the first time information is not within a time period during which a second satellite B in the plurality of second satellites provides a service based on the first synchronization index.

24. The apparatus according to claim 23, wherein the transceiver module is further configured to:
receive third information from the second satellite B, wherein the third information comprises the first time information and the first synchronization index.

25. A communication apparatus, comprising:
a processing module, configured to determine a first synchronization signal, wherein the first synchronization signal comprises a second synchronization index, the second synchronization index is associated with the second ephemeris information, and the second ephemeris information is different from ephemeris information associated with a synchronization index corresponding to another second satellite; and
a transceiver module, configured to send the first synchronization signal.

26. The apparatus according to claim 25, wherein the first synchronization signal further comprises:
the second ephemeris information; or
a first association relationship, wherein the first association relationship is an association relationship between at least one synchronization index and at least one piece of ephemeris information.

27. The apparatus according to claim 25 or 26, wherein the transceiver module is further configured to:
receive first information from a first satellite, wherein the first information comprises synchronization information of at least one communication apparatus, and synchronization information of each communication apparatus comprises at least one synchronization index.

28. The apparatus according to claim 27, wherein the synchronization information of each communication apparatus further comprises a time period corresponding to the at least one synchronization index.

29. The apparatus according to claim 27 or 28, wherein the first information further comprises:
ephemeris information of the at least one communication apparatus; or
identification information of the at least one communication apparatus; or
identification information of at least one transmission reception point TRP, wherein one TRP corresponds to one communication apparatus.

30. The apparatus according to claim 27 or 28, wherein the transceiver module is further configured to:
receive second information from the first satellite, wherein the second information comprises first time information and a first synchronization index, and indicates the communication apparatus to send, during a time period indicated by the first time information, a synchronization signal indicated by the first synchronization index, and the time period indicated by the first time information is not within a time period during which another second satellite provides a service based on the first synchronization index; and
send a second synchronization signal during the time period indicated by the first time information, wherein the second synchronization signal comprises the first synchronization index.

31. The apparatus according to claim 30, wherein the transceiver module is further configured to:
send fourth information to the first satellite, wherein the fourth information comprises second time information and a third synchronization index, and the third synchronization index is unavailable for providing a service during a time period indicated by the second time information.

32. A communication apparatus, comprising:
a transceiver module, configured to receive a first synchronization signal, wherein the first synchronization signal comprises a second synchronization index; and
a processing module, configured to: determine second ephemeris information based on the second synchronization index and a first association relationship; and determine a timing advance TA value based on the second ephemeris information, wherein the first association relationship is an association relationship between at least one synchronization index and at least one piece of ephemeris information, wherein
the transceiver module is further configured to send a random access preamble based on the timing advance value.

33. A communication apparatus, comprising:
a transceiver module, configured to: send a third synchronization signal by using a resource in a first resource set; and receive a first random access preamble from a terminal device; and
a processing module, configured to determine a second satellite A based on the first random access preamble and a second association relationship, wherein the second association relationship comprises an association relationship between a plurality of resource subsets and a plurality of second satellites, a resource for the first random access preamble belongs to a first resource subset in the plurality of resource subsets, and the second satellite A belongs to the plurality of second satellites, wherein
the transceiver module is further configured to send a random access response message to the terminal device, wherein the random access response message comprises ephemeris information and resource information of the second satellite A, and the resource information indicates a resource for the second satellite A to send a synchronization signal.

34. The apparatus according to claim 33, wherein the transceiver module is further configured to:
send fifth information, wherein the fifth information indicates the second association relationship, the second association relationship further comprises an association relationship between the plurality of resource subsets and the first resource set, and the plurality of resource subsets are obtained by partitioning the first resource set.

35. A communication apparatus, comprising:
a transceiver module, configured to: send and receive a third synchronization signal from a first satellite; send a first random access preamble to the first satellite; receive a random access response message; and receive a synchronization signal from a second satellite on a resource indicated by resource information, wherein the third synchronization signal is sent by using a resource in a first resource set, the random access response message comprises ephemeris information and the resource information of the second satellite, and the resource information indicates the resource for the second satellite to send the synchronization signal; and
a processing module, configured to determine the first random access preamble.

36. The apparatus according to claim 35, wherein
the processing module is further configured to determine a first resource subset based on the first resource set and a second association relationship, wherein the second association relationship comprises an association relationship between the first resource set and a plurality of resource subsets, the plurality of resource subsets are obtained by partitioning the first resource set, and the first resource subset belongs to the plurality of resource subsets; and
when sending the first random access preamble to the first satellite, the transceiver module is further configured to send the first random access preamble to the first satellite by using a resource in the first resource subset.

37. A communication apparatus, wherein the communication apparatus comprises a processor and a memory, the memory is configured to store a computer program, and the processor is configured to execute the computer program stored in the memory, to cause the communication apparatus to perform the method according to any one of claims 1 to 6, or to cause the communication apparatus to perform the method according to any one of claims 7 to 13, or to cause the communication apparatus to perform the method according to claim 14, or to cause the communication apparatus to perform the method according to claim 15 or 16, or to cause the communication apparatus to perform the method according to claim 17 or 18.

38. A communication system, wherein the communication system comprises a first satellite, a second satellite, and a terminal device, the first satellite is configured to perform the method according to any one of claims 1 to 6, the second satellite is configured to perform the method according to any one of claims 7 to 13, and the terminal device is configured to perform the method according to claim 14; or the communication system comprises a first satellite, a second satellite, and a terminal device, the first satellite is configured to perform the method according to claim 15 or 16, and the terminal device is configured to perform the method according to claim 17 or 18.

39. A computer-readable storage medium, wherein the computer-readable storage medium is configured to store a computer program, and when the computer program is run on a computer, the computer is caused to perform the method according to any one of claims 1 to 6, or the computer is caused to perform the method according to any one of claims 7 to 13, or the computer is caused to perform the method according to claim 14, or the computer is caused to perform the method according to claim 15 or 16, or the computer is caused to perform the method according to claim 17 or 18.

40. A computer program product, wherein the computer program product comprises a computer program, and when the computer program is run on a computer, the computer is caused to perform the method according to any one of claims 1 to 6, or the computer is caused to perform the method according to any one of claims 7 to 13, or the computer is caused to perform the method according to claim 14, or the computer is caused to perform the method according to claim 15 or 16, or the computer is caused to perform the method according to claim 17 or 18.

41. A chip system, wherein the chip system comprises:
a processor and an interface, wherein the processor is configured to invoke instructions from the interface and run the instructions, and when the processor executes the instructions, the method according to any one of claims 1 to 6 is implemented, or the method according to any one of claims 7 to 13 is implemented, or the method according to claim 14 is implemented, or the method according to claim 15 or 16 is implemented, or the method according to claim 17 or 18 is implemented.
